(19) Europäisches Patentamt
European Patent Office
Office européen des brevets

(11) Veröffentlichungsnummer: **0 261 079 B1**

# (12) EUROPÄISCHE PATENTSCHRIFT

(45) Veröffentlichungstag der Patentschrift: **16.10.91**

(51) Int. Cl.5: **C09B 62/01**, D06P 1/38

(21) Anmeldenummer: **87810513.9**

(22) Anmeldetag: **07.09.87**

Die Akte enthält technische Angaben, die nach dem Eingang der Anmeldung eingereicht wurden und die nicht in dieser Patentschrift enthalten sind.

## (54) Reaktivfarbstoffe, deren Herstellung und Verwendung.

(30) Priorität: **12.09.86 CH 3665/86**

(43) Veröffentlichungstag der Anmeldung:
**23.03.88 Patentblatt 88/12**

(45) Bekanntmachung des Hinweises auf die Patenterteilung:
**16.10.91 Patentblatt 91/42**

(84) Benannte Vertragsstaaten:
**BE CH DE FR GB IT LI**

(56) Entgegenhaltungen:
**EP-A- 0 144 766**
**DE-A- 3 512 690**
**FR-A- 1 211 550**
**FR-A- 2 468 632**
**US-A- 3 507 850**
**US-A- 3 775 050**

(73) Patentinhaber: **CIBA-GEIGY AG**
**Klybeckstrasse 141**
**CH-4002 Basel(CH)**

(72) Erfinder: **Deitz, Rolf**
**Im Heimatland 17**
**CH-4058 Basel(CH)**
Erfinder: **Seiler, Herbert, Dr.**
**Leimgrubenweg 60**
**CH-4125 Riehen(CH)**

**EP 0 261 079 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Der vorliegenden Erfindung lag die Aufgabe zugrunde, neue, verbesserte Reaktivfarbstoffe zu finden, die Baumwolle in den Farbtönen Blau und Marineblau färben. Die neuen Farbstoffe sollten sich vor allem durch hohe Fixierausbeuten und hohe Faser-Farbstoff-Bindungsstabilitäten auszeichnen, sie sollten besonders für das Färben nach dem Ausziehverfahren und dem Kaltverweilverfahren und auch für den Druck geeignet sein, und ausserdem sollten die nicht auf der Faser fixierten Anteile leicht auswaschbar sein. Ferner wurden für die mit den neuen Farbstoffen erhältlichen Färbungen und Drucke gute Allgemeinechtheiten, beispielsweise Licht- und Nassechtheiten, gefordert.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

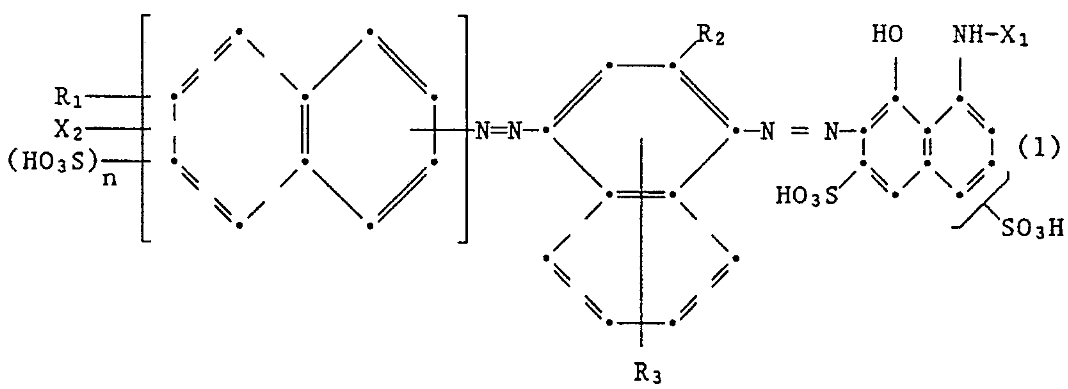
(1),

worin $R_1$ Wasserstoff, Halogen, $C_{1-4}$-Alkyl, $C_{1-4}$-Alkoxy, Nitro oder Carboxy; $R_2$ $C_{1-4}$-Alkyl oder $C_{1-4}$-Alkoxy; $R_3$ Wasserstoff, $C_{1-4}$-Alkyl, $C_{1-4}$-Alkoxy, Acetylamino, Sulfoacetylamino, Ureido oder Sulfo; n = 1 bis 3; $X_2$ Wasserstoff, Vinylsulfonyl, $\beta$-Chloräthylsulfonyl, $\beta$-Sulfatoäthylsulfonyl, $\beta$-Thiosulfatoäthylsulfonyl, $\beta$-Phosphatoäthylsulfonyl, $\beta$-Acetoxyäthylsulfonyl oder ein Rest der Formel

$ClCH_2CH_2SO_2CH_2CH_2CH_2CONH$-,
$ClCH_2CH_2SO_2CH_2CH_2NHCO$-oder
$HO_3SOCH_2CH_2SO_2CH_2CH_2NHCO$-;

$X_1$ ein faserreaktiver Rest der Formel

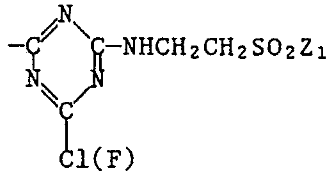

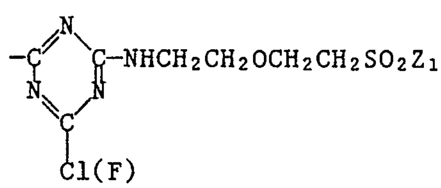

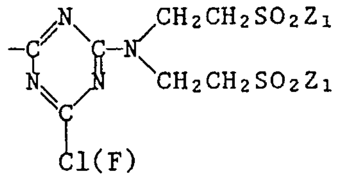

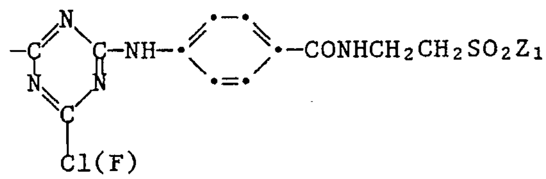

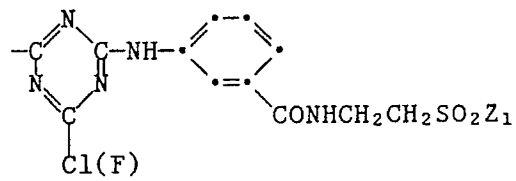

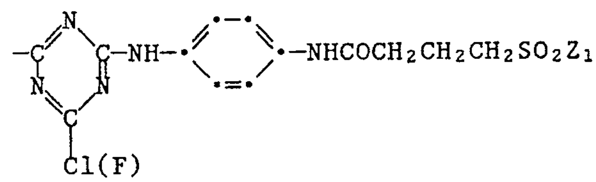

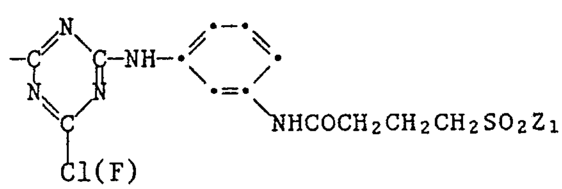

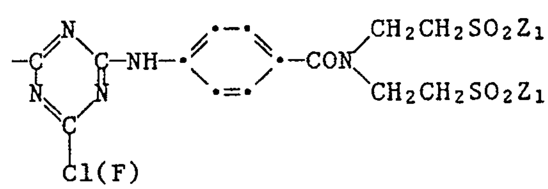

oder

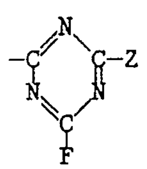

;

$Z_1$ Vinylsulfonyl, β-Chloräthylsulfonyl, β-Sulfatoäthylsulfonyl, β-Thiosulfatoäthylsulfonyl, β-Phosphatoäthylsulfonyl oder β-Acetoxyäthylsulfonyl; und Z den Rest von Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m-

und p-Anisidin, o-, m- und p-Phenetidin, Naphthylamin-(1), Naphthylamin-(2), Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Amino-toluol-4-sulfonsäure,2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5-7-, -3,6,8- und -4,6,8-trisulfonsäure, 2-Naphthylamin-1,3,7-, -1,5,7-, -3,5,7-, -3,6,7-, -3,6,8- und 4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxypropanol, γ-Aethoxypropanol, β-Aethoxy-β-äthoxyäthanol, Glycolsäure, Phenol, o-, m- und p-Chlorphenol, Methanthiol, Aethanthiol, Propanthiol, Isopropanthiol, n-Butanthiol, Thioglycolsäure, Thioharnstoff, Thiophenol, α-Thionaphthol oder β-Thionaphthol bedeuten.

In den oben gegebenen Definitionen der Reste $R_1$, $R_2$ und $R_3$ bedeuten Halogen: Fluor, Chlor oder Brom; $C_{1-4}$-Alkyl: Methyl, Aethyl, Propyl, Isopropyl, n-Butyl, Isobutyl, sek.-Butyl oder tert.-Butyl; und $C_{1-4}$-Alkoxy: Methoxy, Aethoxy, Propyloxy, Isopropyloxy, n-Butyloxy, Isobutyloxy, sek.-Butyloxy oder tert.-Butyloxy. Vorzugsweise sind $R_1$, $R_2$ und $R_3$, soweit zutreffend, Wasserstoff, Chlor, Methyl, Aethyl, Methoxy, Aethoxy, Nitro, Carboxy, Acetylamino, Ureido oder Sulfo. Falls der in eckige Klammern eingeschlossene Teil einen Benzolrest darstellt, ist n vorzugsweise 1 oder 2; falls der betreffende Teil einen Naphthalinrest darstellt, ist n vorzugsweise 2 oder 3.

Als Beispiele für bevorzugte Reste $X_1$ seien die folgenden genannt:

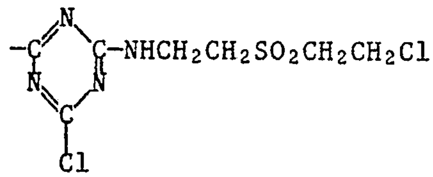

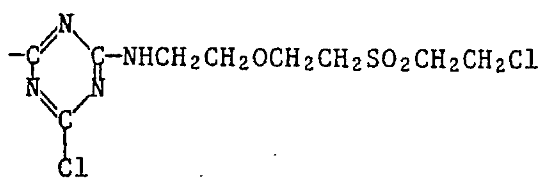

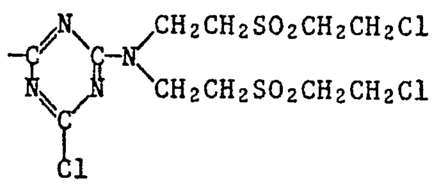

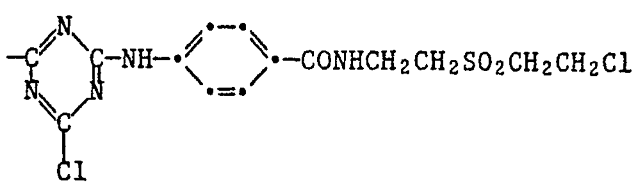

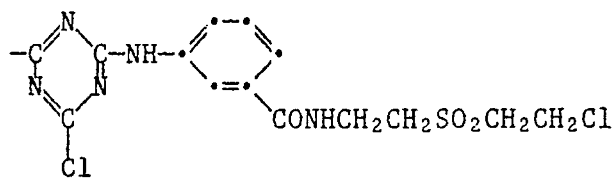

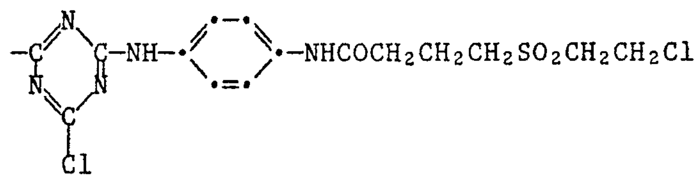

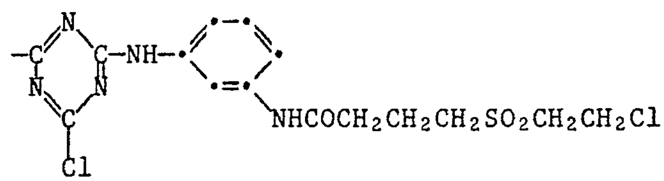

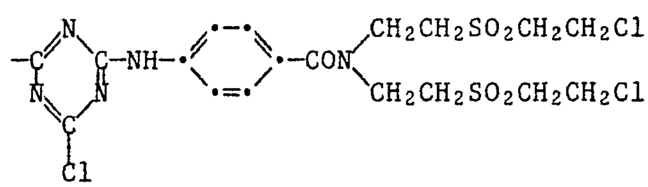

sowie die entsprechenden Fluortriazinreste. Als Reaktivreste $X_1$ sind ferner bevorzugt Fluortriazinreste, welche einen nichtfaserreaktiven Substituenten enthalten, z.B. $-NH_2$, $\beta$-Sulfoäthylamino, $\beta$-Hydroxyäthylamino, N,N-Di-$\beta$-hydroxyäthylamino, Morpholino, Methoxy, Isopropoxy oder dgl.

Bevorzugt sind insbesondere:

a) Reaktivfarbstoffe der Formel

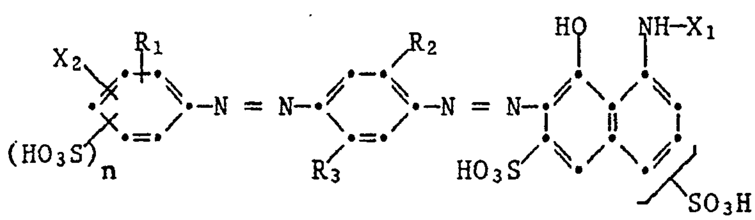

(2),

worin $R_1$ Wasserstoff, Chlor, Methyl, Aethyl, Methoxy, Aethoxy, Nitro oder Carboxy; $R_2$ Methyl, Aethyl, Methoxy oder Aethoxy; $R_3$ Wasserstoff, Methyl, Aethyl, Methoxy, Aethoxy, Acetylamino, Ureido oder Sulfo; und n = 1 oder 2 ist; und $X_1$ und $X_2$ die unter Formel (1) angegebenen Bedeutungen haben;

b) Reaktivfarbstoffe der Formel

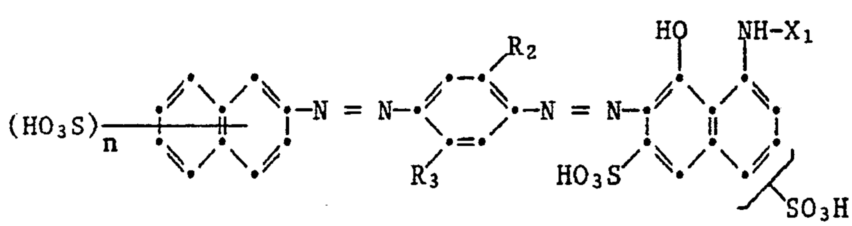

(3),

worin $R_2$ Methyl, Aethyl, Methoxy oder Aethoxy; $R_3$ Wasserstoff, Methyl, Aethyl, Methoxy, Aethoxy, Acetylamino, Ureido oder Sulfo; n = 1 bis 3; und $X_1$ die unter der Formel (1) angegebenen Bedeutungen hat.

c) Reaktivfarbstoffe der Formel

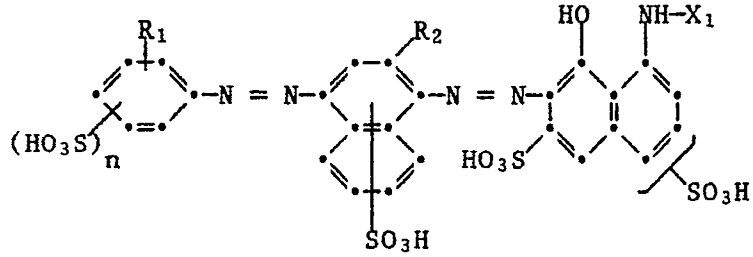

(4),

worin $R_1$ Wasserstoff, Chlor, Methyl, Aethyl, Methoxy, Aethoxy, Nitro oder Carboxy; $R_2$ Methyl, Aethyl, Methoxy oder Aethoxy; n = 1 bis 2, und $X_1$ die unter der Formel (1) angegebenen Bedeutungen hat.

d) Reaktivfarbstoffe der Formel

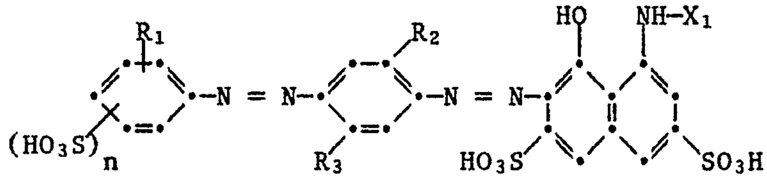

(5),

worin $R_1$, $R_2$, $R_3$ und n die unter Formel (2) angegebenen Bedeutungen haben; und $X_1$ die unter der Formel (1) angegebenen Bedeutungen hat.

e) Reaktivfarbstoffe der Formel

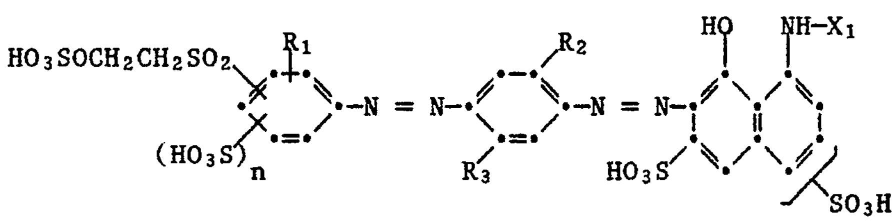

(6),

worin $R_1$, $R_2$, $R_3$ und n die unter Formel (2) angegebenen Bedeutungen haben; und $X_1$ die unter der Formel (1) angegebenen Bedeutungen hat.

f) Reaktivfarbstoff der Formel

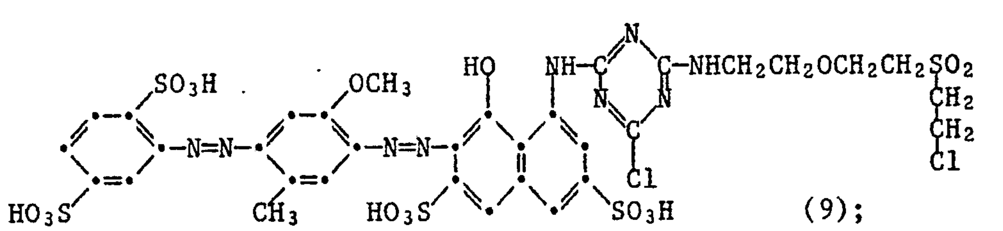

(9);

g) Reaktivfarbstoff der Formel

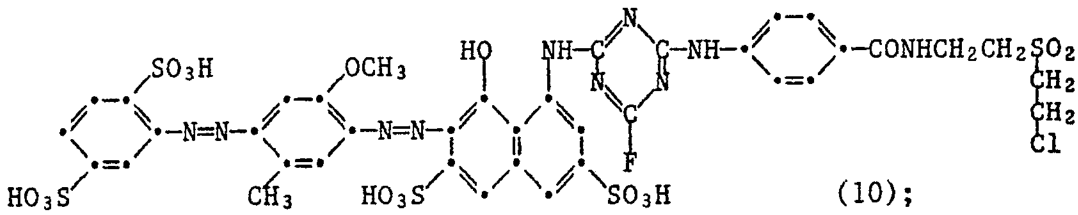

(10);

h) Reaktivfarbstoff der Formel

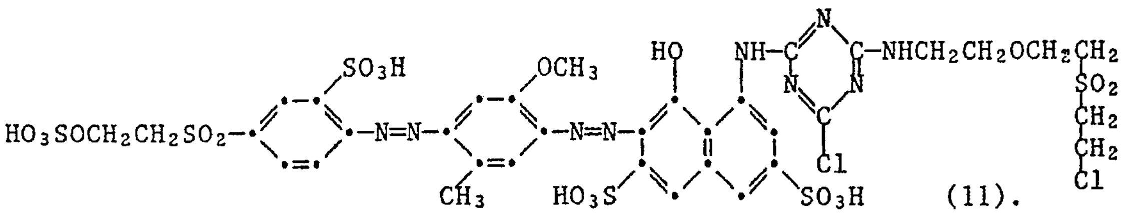

(11).

i) Reaktivfarbstoffe der Formel

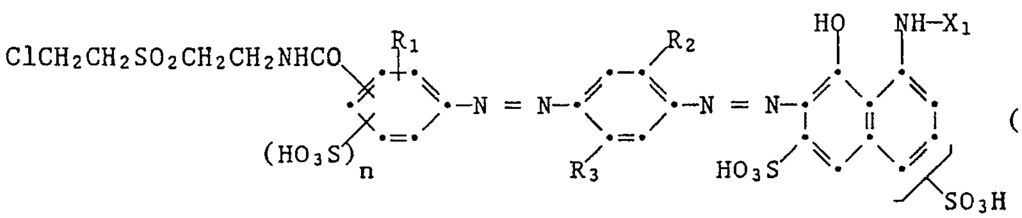

(14),

worin $R_1$, $R_2$, $R_3$ und n die unter Formel (2) angegebenen Bedeutungen haben; und $X_1$ die unter der Formel (1) angegebene Bedeutung hat.

Das Verfahren zur Herstellung von Reaktivfarbstoffen der Formel (1) ist dadurch gekennzeichnet, dass man in entsprechende Disazofarbstoffe oder deren Vorprodukte einen Rest $X_1$ und/oder $X_2$ einführt, oder dass man im Falle der Verwendung von Farbstoffvorprodukten die erhaltenen Zwischenprodukte in die gewünschten Endfarbstoffe überführt und gegebenenfalls eine weitere Umwandlungsreaktion anschliesst.

Die sekundären Disazofarbstoffe werden in an sich bekannter Weise durch Diazotieren und Kuppeln hergestellt. Die Reaktivreste $X_1$ bzw. $X_2$ werden nachträglich eingeführt oder sind schon in den Vorprodukten enthalten. So kann man z.B. eine Diazokomponente verwenden, welche bereits einen Reaktivrest $X_2$ enthält. Man diazotiert diese und kuppelt auf eine Mittelkomponente, diazotiert das erhaltene Monoazozwischenprodukt und kuppelt auf die H(K)-Säure, die nachträglich mit einer Reaktivkomponente, z.B. $\alpha,\beta$-Dibrompropionylchlorid, 2,4,6-Trichlor-s-triazin, 2,4-Difluor-6-amino-s-triazin oder 2,4,6-Trifluor-5-chlorpyrimidin, acyliert werden kann. Die H(K)-Säure kann aber auch schon vor der zweiten Kupplung mit einer Reaktivkomponente acyliert werden; andererseits kann ein Reaktivrest $X_2$ gegebenenfalls auch nach vollzogener erster oder zweiter Kupplung eingeführt werden.

Vorzugsweise geht man so vor, dass man eine Diazokomponente der Formel

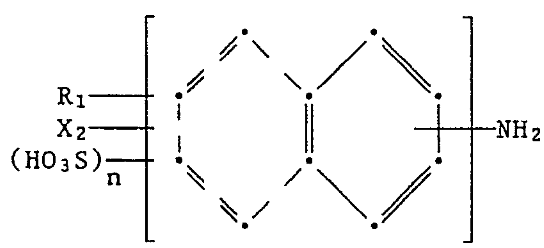

diazotiert und auf eine Mittelkomponente der Formel

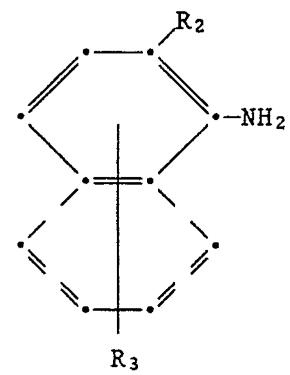

kuppelt, das erhaltene Monoazozwischenprodukt erneut diazotiert und auf H(K)-Säure kuppelt und die so erhaltene Disazoverbindung mit einer Verbindung der Formel

Hal-$X_1$

acyliert, worin $R_1$, $R_2$, $R_3$, $X_1$, $X_2$ und n jeweils die zuvor angegebene Bedeutung haben und Hal für Fluor oder Chlor steht.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur bis Raumtemperatur. Die Kupplung auf die Kupplungskomponente erfolgt bei stark sauren, neutralen bis schwach alkalischen pH-Werten.

Falls $X_1$ bzw. $X_2$ ein über eine Aminogruppe gebundener Reaktivrest ist, erfolgt die Kondensation der entsprechenden Reaktivkomponenten mit den Diazokomponenten oder den Kupplungskomponenten bzw. mit acylierbaren Monoazo- oder Disazo-Zwischenprodukten bzw. mit den aminogruppenhaltigen Farbstoffen oder deren Vorprodukten vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin $X_2$ ein Rest $HO-CH_2CH_2-SO_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin $X_2$ die Gruppe $H_2C=CH-SO_2-$ ist, und lagert an das Zwischenprodukt Thioschwefelsäure an, wobei ein Rest $HO_3SS-CH_2CH_2-SO_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0° C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80° C erfolgen. Vorzugsweise erfolgt die Sulfatierung durch Eintragen der betreffenden Verbindung in Schwefelsäuremonohydrat bei Temperaturen zwischen 5 und 15° C. Die Einführung eines anderen Restes für $X_2$ in eine Verbindung der Formel (1) oder ein Zwischenprodukt anstelle eines Halogenatoms oder der Sulfatogruppe, beispielsweise einer Thiosulfato- oder Phosphatogruppe erfolgt in an sich bekannter Weise. Gleichartige Umwandlungen können auch vorgenommen werden, wenn der Rest $X_1$ eine der genannten Sulfonylgruppen enthält.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffspaltenden Mitteln, wie Natriumhydroxid, behandeln, wobei die Sulfatoäthylsulfonylreste in Vinylsulfonylreste übergehen.

Die wichtigsten Verfahrensvarianten sind in den Ausführungsbeispielen dargestellt.

Als Ausgangsverbindungen, die, je nach der Konstitution des gewünschten Endfarbstoffes, verwendet werden können, seien die folgenden genannt.

<u>Diazokomponenten</u>

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobenzol-2-, -3- oder -4-sulfonsäureamid, 1-Aminobenzol-2-, -3- oder -4-carbonsäure, 1-Amino-3-trifluormethylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methylbenzol-2,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-4-(α,β-dibrompropionylamino)-benzol-2-sulfonsäure, 1-Amino-2-brom-4-β-sulfatoäthylsulfonylbenzol, 1-Amino-2,6-dichlor-4-β-sulfatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol,1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol, 1-Amino-2,4-di-(β-acetoxyäthylsulfonyl)-5-chlorbenzol, 2-Amino-8-β-sulfatoäthylsulfonylnaphthalin, 2-Amino-6-β-sulfatoäthylsulfonylnaphthalin, 2-Amino-6-β-sulfatoäthylsulfonylnaphthalin-1-sulfonsäure, 2-Amino-8-β-sulfatoäthylsulfonylnaphthalin-6-sulfonsäure, 2-Amino-6,8-di-(β-sulfatoäthylsulfonyl)-naphthalin.

Ferner sind zu erwähnen die entsprechenden β-Hydroxy-verbindungen, welche als Vorprodukte verwendet werden können, z.B.: 1-Amino-4-β-hydroxyäthylsulfonylbenzol, 1-Amino-3-β-hydroxyäthylsulfonylbenzol, 1-Amino-2,4-di-(β-hydroxyäthylsulfonyl)-benzol und 1-Amino-2,4-di-(β-hydroxyäthylsulfonyl)-5-chlorbenzol.

3-Aminobenzoesäure-N'-β-(β-chloräthylsulfonyl)-äthylamid,
4-Chlor-3-aminobenzoesäure-N'-β-(β'-chloräthylsulfonyl)-äthylamid,
4-Methyl-3-aminobenzoesäure-N'-β-(β'-chloräthylsulfonyl)-äthylamid,
4-Methoxy-3-aminobenzoesäure-N'-β-(β'-chloräthylsulfonyl)-äthylamid,
4-Aminobenzoesäure-N'-β-(β'-chloräthylsulfonyl)-äthylamid.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben bei

der Erläuterung des Verfahrens erwähnt ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Als Mittelkomponenten kommen zum Teil die gleichen Verbindungen in Betracht, die oben als Diazokomponenten genannt sind, wobei allerdings die in Formel (1) festgelegte Struktur zu beachten ist. Wichtige Mittelkomponenten sind z.B. 1-Amino-2-methoxy-5-methylbenzol, 1-Amino-2,5-dimethylbenzol, 1-Amino-2-methoxy-5-acetylaminobenzol, 1-Amino-3-hydroxyacetylaminobenzol, 1-Aminonaphthalin-6- oder -8-sulfonsäure und 1-Amino-2-methoxynaphthalin-6-sulfonsäure, 1-Amino-2-methylbenzol, 1-Amino-2-methoxybenzol, 1-Amino-2-äthoxybenzol, 1-Amino-2,5-dimethylbenzol, 1-Amino-2,5-dimethoxybenzol, 1-Amino-2-methylbenzol-5-sulfonsäure, 1-Amino-2-methoxybenzol-5-sulfonsäure, 1-Amino-2-methyl-5-acetylaminobenzol, 1-Amino-2-methoxy-5-acetylaminobenzol, 1-Amino-2-methoxy-5-ureidobenzol, 1-Amino-2-methoxy-5-methylbenzol, 1-Amino-2-methyl-5-ureidobenzol.

Kupplungskomponenten

1-Amino-8-hydroxynaphthalin-3,6- oder -4,6-disulfonsäure, 1-Acetylamino-8-hydroxynaphthalin-3,6- oder -4,6-disulfonsäure, 1-Benzoylamino-8-hydroxynaphthalin-3,6- oder -4,6-disulfonsäure, 1-(3'-Aminobenzoylamino)-8-hydroxynaphthalin-3,6- oder -4,6-disulfonsäure und 1-(4'-Aminobenzoylamino)-8-hydroxynaphthalin-3,6- oder -4,6-disulfonsäure.

Falls $X_1$ ein an die Aminogruppe der H(K)-Säure gebundener Halogentriazinrest ist, kann durch vorhergehende oder nachträgliche Kondensation mit einer Amino-, Hydroxy- oder Mercaptoverbindung ein Halogenatom am Triazinring gegen einen Amino-, Alkoxy-, Aryloxy-, Alkylthio oder Arylthiorest ausgetauscht werden. Als Beispiele für derartige Amino-, Hydroxy- und Mercaptoverbindungen seien die folgenden genannt:
Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, $\beta$-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, Naphthylamin-(1), Naphthylamin-(2), Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Amino-toluol-4-sulfonsäure, 2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-,-1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5-7-, -3,6,8- und -4,6,8-trisulfonsäure, 2-Naphthylamin-1,3,7-, -1,5,7-, -3,5,7-, -3,6,7-, -3,6,8- und 4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert.-Butanol, Hexanol, Cyclohexanol, $\beta$-Methoxyäthanol, $\beta$-Aethoxyäthanol, $\gamma$-Methoxypropanol, $\gamma$-Aethoxypropanol, $\beta$-Aethoxy-$\beta$-äthoxyäthanol, Glycolsäure, Phenol, o-, m- und p-Chlorphenol, Methanthiol, Aethanthiol, Propanthiol, Isopropanthiol, n-Butanthiol, Thioglycolsäure, Thioharnstoff, Thiophenol, $\alpha$-Thionaphthol, $\beta$-Thionaphthol.

Ferner kommen hier auch viele der als Diazokomponenten genannten Verbindungen in Betracht, insbesondere jene, die einen Vinylsulfonylrest oder einen gleichwertigen oder ähnlichen Reaktivrest enthalten.

Die Kondensation der Halogentriazine mit den genannten Amino-, Hydroxy- oder Mercaptoverbindungen erfolgt in an sich bekannter Weise, vorzugsweise in Gegenwart von alkalischen Mitteln.

Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und evtl. Carboxygruppen von synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten.

Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Ebenfalls geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten.

Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit. Gegenüber bekannten blauen Azofarbstoffen zeigen die erfindungsgemässen Reaktivfarbstoffe bei der Ausfärbung auf mit Kunstharz ausgerüsteten Geweben überraschenderweise einen wesentlich geringeren Phototropic-Effekt.

Es sind bereits aus der US-Patentschrift Nr. 3,507,850 blaue Disazofarbstoffe bekannt, die jedoch anstelle des faserreaktiven Halotriazinylrestes einen polymerisierbaren Methacrylatrest enthalten und dementsprechend als Zwischenprodukte für die Herstellung von flüchtigen polymeren Farbstoffen dienen.

Die US-Patentschrift Nr. 3,775,050 beschreibt einen blauen Disazofarbstoff enthaltend einen Chlortriazinylrest mit daran gebundenen Acetylaminoanilino-Substituent als Zwischenprodukt für die Herstellung von carbamathaltigen Farbstoffen, mit denen Baumwolle im sauren Medium gefärbt werden kann.

Aus der DE-A 3 512 690 sind bereits blaue Disazofarbstoffe mit einem spezifischen β-Sulfatoethylsulfonylanilino-halotriazinylrest bekannt, die jedoch nicht alle Wünsche bezüglich der Echtheiten und der Eignung für bestimmte Färbeverfahren voll zu befriedigen vermögen.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter. Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

18,5 g Cyanurchlorid werden in Gegenwart eines Dispergators und eines Phosphatpuffers in Eis und Wasser verrührt. Zu dieser Suspension tropft man bei 0 bis 2° C innert 15 Minuten eine wässrige Lösung aus 31,9 g 1-Amino-8-hydroxynaphthalin-3,6-disulfonsäure, wobei während der Kondensation ein pH-Wert von 1 bis 2 eingehalten wird. Nach 1 bis 2-stündigem Nachrühren ist die Umsetzung beendet.

40,1 g 4-Amino-3-methoxy-6-methyl-2',5'-disulfo-1,1'-azobenzol (hergestellt durch Diazotierung und Kupplung von 1-Aminobenzol-2,5-disulfonsäure mit 1-Amino-2-methoxy-5-methylbenzol) werden in 400 ml Wasser neutral gelöst und mit 25 ml 4n Natriumnitritlösung und 25 ml konzentrierter Salzsäure bei 20° C diazotiert. Nach einstündigem Nachrühren wird eventuell überschüssiges Nitrit mit Amidosulfonsäure beseitigt.

Man gibt nun bei 0 bis 5° C die Diazoverbindung zur oben hergestellten Lösung der reaktiven Kupplungskomponente und hält im Kupplungsgemisch den pH-Wert mit 40%iger Natriumacetatlösung anfänglich bei 4,5 und später mit 10%iger Natriumcarbonatlösung bei 7. Nach beendigter Kupplung setzt man 26,5 g 2-(β-Aminoäthoxy)-2'-chlordiäthylsulfonhydrochlorid zu der Lösung und hält den pH-Wert mit 10%iger Natriumcarbonatlösung bei 7,5. Die Temperatur wird von 0 bis 5° C allmählich auf 30° C erhöht.

Nach 2 bis 3-stündigem Nachrühren ist die Kondensation beendet. Der pH-Wert wird auf 6 gestellt, der Farbstoff aus der Lösung mit Natriumchlorid ausgesalzen, abgesaugt, mit 25%iger Natriumchloridlösung gewaschen und bei 40 °C im Vakuum getrocknet. Der Farbstoff der in der Form der freien Säure der Formel

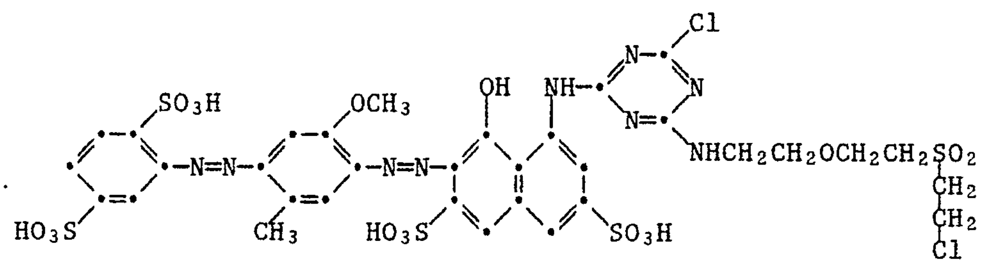

entspricht, färbt Baumwolle in blauen Tönen mit guten Echtheitseigenschaften.

Analog lassen sich die in der nachfolgenden Tabelle 1 aufgeführten Farbstoffe herstellen. Sie ergeben auf Baumwolle gefärbt ebenfalls blaue, waschechte Färbungen.

Tabelle 1

| No. | Monoazofarbstoff | Kupplungskomponente | Reaktivkomponente | Amin |
|---|---|---|---|---|
| 1 | 1-Aminobenzol-3-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 2 | 1-Aminobenzol-3-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2SO_2CH_2CH_2Cl$ |
| 3 | 1-Aminobenzol-3-sulfonsäure → 1-Amino-2-methoxy-5-sulfoacetyl-aminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| ~~4~~ | ~~1-Aminobenzol-3-sulfonsäure → 1-Amino-2,5-dimethoxybenzol~~ | ~~1-Amino-8-hydroxy-naphthalin-3,6-disulfonsäure~~ | ~~4-(β-Chloräthyl-sulfonyl)-buttersäurechlorid~~ | ~~—~~ |
| 4 ~~5~~ | 1-Aminobenzol-3-sulfonsäure → 1-Amino-2-methoxy-5-acetylamino-benzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 5 ~~6~~ | 1-Aminobenzol-4-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 6 ~~7~~ | 1-Aminobenzol-4-sulfonsäure → 1-Amino-2,5-dimethoxybenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 7 ~~8~~ | 1-Aminobenzol-4-sulfonsäure → 2-methoxy-5-acetylaminobenzol | 1-Amino-8-hydroxy-naphthalin-3,6- | 2,4,6-Trichlor-s-triazin | $H_2NCH_2CH_2SO_2CH_2CH_2Cl$ |

| No. | Monoazofarbstoff | Kupplungskomponente | Reaktivkomponente | Amin |
|---|---|---|---|---|
| ~~9~~ 8 | 1-Amino-4-methoxybenzol-2-sulfonsäure → 1-Amino-2-methoxy-5-methylbenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |
| ~~10~~ | ~~1-Amino-4-methoxybenzol-2-sulfonsäure → 1-Amino-2,5-dimethoxybenzol~~ | ~~1-Amino-8-hydroxynaphthalin-3,6-disulfonsäure~~ | ~~4-(β-Chloräthylsulfonyl)-buttersäurechlorid~~ | ~~—~~ |
| ~~11~~ 9 | 1-Amino-4-methoxybenzol-2,5-disulfonsäure → 1-Amino-2-methoxy-5-methylbenzol | 1-Amino-8-hydroxynaphthalin-3,6-disulfonsäure | 2,4,6-Trichlor-s-triazin | $H_2NCH_2CH_2SO_2CH_2CH_2Cl$ |
| ~~12~~ 10 | 1-Amino-4-methoxybenzol-2,5-disulfonsäure → 1-Amino-2,5-dimethoxybenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |
| ~~13~~ | ~~1-Amino-4-methoxybenzol-2,5-disulfonsäure → 1-Amino-2,5-dimethoxybenzol~~ | ~~1-Amino-8-hydroxynaphthalin-3,6-disulfonsäure~~ | ~~4-(β-Chloräthylsulfonyl)-buttersäurechlorid~~ | ~~—~~ |
| ~~14~~ | ~~1-Amino-4-methoxybenzol-5-sulfonsäure → 1-Amino-2-methoxy-5-sulfoacetylaminobenzol~~ | ~~1-Amino-8-hydroxynaphthalin-3,6-disulfonsäure~~ | ~~4-(β-Chloräthylsulfonyl)-buttersäurechlorid~~ | ~~—~~ |
| ~~15~~ 11 | 1-Amino-4-methoxybenzol-5-sulfonsäure → 1-Amino-2-methoxy-5-sulfoacetylaminobenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |
| ~~16~~ | ~~1-Amino-4-methylbenzol-2-sulfonsäure → 1-Amino-2-methoxy-5-methylbenzol~~ | ~~1-Amino-8-hydroxynaphthalin-3,6-disulfonsäure~~ | ~~4-(β-Chloräthylsulfonyl)-buttersäurechlorid~~ | ~~—~~ |
| ~~17~~ 12 | 1-Amino-4-methylbenzol-2,5-disulfonsäure → 1-Amino-2-methoxy-5-acetylaminobenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |

| | No. | Monoazofarbstoff | Kupplungskomponente | Reaktivkomponente | Amin |
|---|---|---|---|---|---|
| 13 | ~~18~~ | 1-Amino-4-methylbenzol-2,5-disulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2SO_2CH_2CH_2Cl$ |
| 14 | ~~19~~ | 1-Amino-2-methylbenzol-4-sulfonsäure → 1-Amino-2-methoxy-5-sulfoacetylaminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 15 | ~~20~~ | 1-Amino-2-methylbenzol-5-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| | ~~21~~ | ~~1-Amino-2-chlorbenzol-5-sulfonsäure → 1-Amino-2-methoxy-5-acetylaminobenzol~~ | ~~1-Amino-8-hydroxy-naphthalin-3,6-disulfonsäure~~ | ~~4-(β-Chloräthyl-sulfonyl)-buttersäurechlorid~~ | |
| 16 | ~~22~~ | 1-Amino-4-carboxybenzol → 1-Amino-2-methoxy-5-sulfoacetyl-aminobenzol | 1-Amino-8-hydroxy-naphthalin-3,6-disulfonsäure | 2,4,6-Trichlor-s-triazin | $H_2NCH_2CH_2SO_2CH_2CH_2Cl$ |
| 17 | ~~23~~ | 1-Amino-4-carboxybenzol-3-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 18 | ~~24~~ | 1-Amino-3-carboxybenzol-6-sulfonsäure → 1-Amino-2-methoxy-5-acetylaminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 19 | ~~25~~ | 1-Amino-2-carboxybenzol-5-sulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 20 | ~~26~~ | 1-Aminobenzol-2,5-disulfonsäure → 1-Amino-2-methoxy-5-methyl-benzol | 1-Amino-8-hydroxy-naphthalin-3,6-disulfonsäure | 2,4,6-Trichlor-s-triazin | $H_2NCH_2CH_2SO_2CH_2CH_2Cl$ |

| No. | Monoazofarbstoff | Kupplungskomponente | Reaktivkomponente | Amin |
|---|---|---|---|---|
| 21 ~~27~~ | 1-Aminobenzol-2,5-disulfonsäure → 1-Amino-2-methoxy-5-methyl-benzol | 1-Amino-8-hydroxy-naphthalin-3,6-disulfonsäure | 2,4,6-Trichlor-s-triazin | $HN(CH_2CH_2SO_2CH_2CH_2Cl)_2$ |
| 22 ~~28~~ | 1-Aminobenzol-2,5-disulfonsäure → 1-Amino-2-methoxy-5-methyl-benzol | 1-Amino-8-hydroxy-naphthalin-3,6-disulfonsäure | 2,4,6-Trichlor-s-triazin | 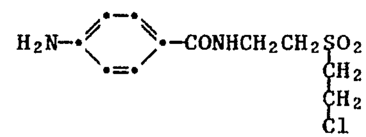 |
| 23 ~~29~~ | 1-Aminobenzol-2,5-disulfonsäure → 1-Amino-2-methoxy-5-methyl-benzol | 1-Amino-8-hydroxy-naphthalin-3,6-disulfonsäure | 2,4,6-Trichlor-s-triazin | 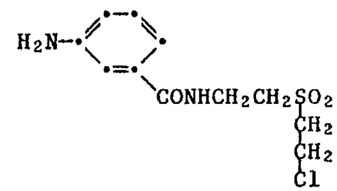 |
| ~~30~~ | ~~1-Aminobenzol-2,5-disulfonsäure → 1-Amino-2-methoxy-5-methyl-benzol~~ | ~~1-Amino-8-hydroxy-naphthalin-3,6-disulfonsäure~~ | ~~4-(β-Chloräthyl-sulfonyl)-buttersäurechlorid~~ | ~~—~~ |
| ~~31~~ | ~~1-Aminobenzol-2,5-disulfonsäure → 1-Amino-2-methoxy-5-methyl-benzol~~ | ~~1-Amino-8-hydroxy-naphthalin-3,6-disulfonsäure~~ | ~~α,β-Dibrompropion-säurechlorid~~ | ~~—~~ |
| ~~32~~ | ~~1-Aminobenzol-2,5-disulfonsäure → 1-Amino-2-methoxy-5-methyl-benzol~~ | ~~1-Amino-8-hydroxy-naphthalin-3,6-disulfonsäure~~ | ~~2,4,6-Trifluor-5-chlorpyrimidin~~ | ~~—~~ |
| ~~33~~ | ~~1-Aminobenzol-2,5-disulfonsäure → 1-Amino-2-methoxy-5-methyl-benzol~~ | ~~1-Amino-8-hydroxy-naphthalin-3,6-disulfonsäure~~ | ~~2,4-Dichlor-6-iso-propoxy-s-triazin~~ | ~~—~~ |

| No. | Monoazofarbstoff | Kupplungskomponente | Reaktivkomponente | Amin |
|---|---|---|---|---|
| 24 ~~34~~ | 1-Aminobenzol-2,5-disulfonsäure → 1-Amino-2-methoxy-5-methyl-benzol | 1-Amino-8-hydroxy-naphthalin-4,6-disulfonsäure | 2,4,6-Trichlor-s-triazin | $H_2NCH_2CH_2OCH_2CH_2SO_2CH_2CH_2Cl$ |
| 25 ~~35~~ | 1-Aminobenzol-2,5-disulfonsäure → 1-Amino-2-äthoxy-5-methyl-benzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 26 ~~36~~ | 1-Aminobenzol-2,5-disulfonsäure → 1-Amino-2,5-dimethoxybenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 27 ~~37~~ | 1-Aminobenzol-2,5-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 28 ~~38~~ | 1-Aminobenzol-2,5-disulfonsäure → 2-Methoxy-1-naphthylamin-6-sulfonsäure | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 29 ~~39~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 30 ~~40~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trichlor-s-triazin | $H_2NCH_2CH_2SO_2CH_2CH_2Cl$ |
| 31 ~~41~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trichlor-s-triazin | $HN(CH_2CH_2SO_2CH_2CH_2Cl)_2$ |

| No. | Monoazofarbstoff | Kupplungskomponente | Reaktivkomponente | Amin |
|---|---|---|---|---|
| 32 ~~42~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trichlor-s-triazin | 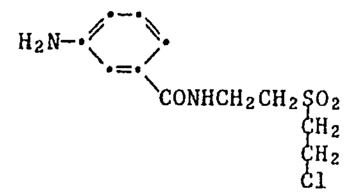 |
| 33 ~~43~~ | 1-Amino-2,4-disulfonsäure → → 1-Amino-2-methoxy-5-methyl-benzol | 1-Amino-8-hydroxy-naphthalin-3,6-disulfonsäure | 2,4,6-Trichlor-s-triazin | 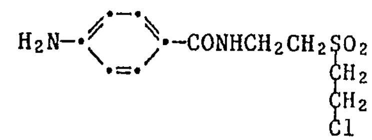 |
| ~~44~~ | ~~1-Aminobenzol-2,4-disulfonsäure → 1-Amino-2-methoxy-5-methyl-benzol~~ | ~~1-Amino-8-hydroxy-naphthalin-3,6-disulfonsäure~~ | ~~4-(β-Chloräthyl-sulfonyl)-buttersäurechlorid~~ | |
| ~~45~~ | ~~1-Aminobenzol-2,4-disulfonsäure → 1-Amino-2-methoxy-5-methyl-benzol~~ | ~~1-Amino-8-hydroxy-naphthalin-3,6-disulfonsäure~~ | ~~α,β-Dibrompropionsäurechlorid~~ | |
| ~~46~~ | ~~1-Aminobenzol-2,4-disulfonsäure → 1-Amino-2-methoxy-5-methyl-benzol~~ | ~~1-Amino-8-hydroxy-naphthalin-3,6-disulfonsäure~~ | ~~2,4,6-Trifluor-5-chlor-pyrimidin~~ | |
| 34 ~~47~~ | 1-Aminobenzol-2,4-disulfonsäure → 1-Amino-2,5-dimethoxybenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 35 ~~48~~ | 1-Aminobenzol-2,4-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $NH_2CH_2CH_2SO_2CH_2CH_2Cl$ |

| | No. | Monoazofarbstoff | Kupplungskomponente | Reaktivkomponente | Amin |
|---|---|---|---|---|---|
| 36 | ~~49~~ | 1-Aminobenzol-2,4-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | $NH_2CH_2CH_2SO_2CH_2CH_2Cl$ |
| 37 | ~~50~~ | 2-Naphthylamin-1,5-disulfonsäure → 1-Amino-2-methoxy-5-methyl-benzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 38 | ~~51~~ | 2-Naphthylamin-4,8-disulfonsäure → 1-Amino-2-methoxy-5-methyl-benzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| | ~~52~~ | ~~2-Naphthylamin-4,8-disulfonsäure → 1-Amino-2-methoxy-5-methyl-benzol~~ | ~~1-Amino-8-hydroxy-naphthalin-3,6-disulfonsäure~~ | ~~4-(β-Chloräthyl-sulfonyl)-buttersäurechlorid~~ | — |
| 39 | ~~53~~ | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 40 | ~~54~~ | 2-Naphthylamin-4,8-disulfonsäure → 1-Amino-2-äthoxy-5-acetyl-aminobenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 41 | ~~55~~ | 2-Naphthylamin-4,8-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | $NH_2CH_2CH_2SO_2CH_2CH_2Cl$ |
| | ~~56~~ | ~~2-Naphthylamin-4,8-disulfonsäure → 1-Amino-2-methoxy-5-sulfo-acetylaminobenzol~~ | ~~1-Amino-8-hydroxy-naphthalin-3,6-disulfonsäure~~ | ~~α,β-Dichlor-propionsäure-chlorid~~ | — |
| 42 | ~~57~~ | 2-Naphthylamin-5,7-disulfonsäure → 1-Amino-2-methoxy-5-methyl-benzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |

| | No. | Monoazofarbstoff | Kupplungskomponente | Reaktivkomponente | Amin |
|---|---|---|---|---|---|
| 43 | ~~58~~ | 2-Naphthylamin-3,6-disulfonsäure → 1-Amino-2-methoxy-5-methyl-benzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 44 | ~~59~~ | 2-Naphthylamin-3,6-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 45 | ~~60~~ | 2-Naphthylamin-3,6-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $NH_2CH_2CH_2SO_2CH_2CH_2Cl$ |
| 46 | ~~61~~ | 2-Naphthylamin-3,6-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| | ~~62~~ | ~~2-Naphthylamin-3,6-disulfonsäure → 1-Amino-2-methoxy-5-sulfo-acetylaminobenzol~~ | ~~1-Amino-8-hydroxy-naphthalin-4,6-disulfonsäure~~ | ~~4-(β-Chloräthyl-sulfonyl)-buttersäurechlorid~~ | ~~—~~ |
| 47 | ~~63~~ | 2-Naphthylamin-6,8-disulfonsäure → 1-Amino-2-methoxy-5-methyl-benzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 48 | ~~64~~ | 2-Naphthylamin-6,8-disulfonsäure → 1-Amino-2-methoxy-5-acetyl-aminobenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 49 | ~~65~~ | 2-Naphthylamin-6,8-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | $NH_2CH_2CH_2SO_2CH_2CH_2Cl$ |
| | ~~66~~ | ~~2-Naphthylamin-6,8-disulfonsäure → 1-Amino-2-methoxy-5-sulfo-acetylaminobenzol~~ | ~~1-Amino-8-hydroxy-naphthalin-3,6-disulfonsäure~~ | ~~4-(β-Chloräthyl-sulfonyl)-buttersäurechlorid~~ | ~~—~~ |

| | No. | Monoazofarbstoff | Kupplungskomponente | Reaktivkomponente | Amin |
|---|---|---|---|---|---|
| 50 | 67 | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trichlor-s-triazin | $NH_2CH_2CH_2OCH_2CH_2SO_2CH_2CH_2Cl$ |
| 51 | 68 | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trichlor-s-triazin | $HN(CH_2CH_2SO_2CH_2CH_2Cl)_2$ |
| 52 | 69 | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trichlor-s-triazin | 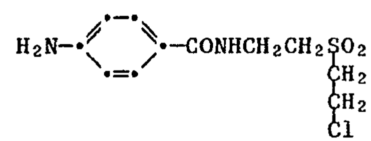 |
| | ~~70~~ | ~~2-Naphthylamin-3,6,8-trisulfonsäure → 1-Amino-2-methoxy-5-methylbenzol~~ | ~~1-Amino-8-hydroxy-naphthalin-3,6-disulfonsäure~~ | ~~4-(β-Chloräthylsulfonyl)-buttersäurechlorid~~ | — |
| 53 | 71 | 2-Naphthylamin-3,6,8-trisulfonsäure → 1-Amino-2,5-dimethoxy-benzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 54 | 72 | 2-Naphthylamin-3,6,8-trisulfonsäure → 1-Amino-2-methoxy-5-acetylaminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 55 | 73 | 2-Naphthylamin-3,6,8-trisulfonsäure → 1-Amino-2-äthoxy-5-acetylaminobenzol | 1-Amino-8-hydroxy-naphthalin-3,6-disulfonsäure | 2,4,6-Trichlor-s-triazin | $H_2NCH_2CH_2SO_2CH_2CH_2Cl$ |
| 56 | 74 | 2-Naphthylamin-3,6,8-trisulfonsäure → 1-Amino-2-methoxy-5-sulfoacetylaminobenzol | 1-Amino-8-hydroxy-naphthalin-3,6-disulfonsäure | 2,4,6-Trichlor-s-triazin | $H_2NCH_2CH_2SO_2CH_2CH_2Cl$ |

| No. | Monoazofarbstoff | Kupplungskomponente | Reaktivkomponente | Amin |
|---|---|---|---|---|
| ~~75~~ | ~~2-Naphthylamin-3,6,8-trisulfonsäure → 1-Amino-2-methoxy-5-sulfoacetylaminobenzol~~ | ~~1-Amino-8-hydroxy-naphthalin-4,6-disulfonsäure~~ | ~~2,4-Dichlor-iso-propoxy-s-triazin~~ | ~~——~~ |
| 57 ~~76~~ | 2-Naphthylamin-3,6,8-trisulfonsäure → 1-Amino-2-methoxy-5-sulfoacetylaminobenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 58 ~~77~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 59 ~~78~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trichlor-s-triazin | $H_2NCH_2CH_2SO_2CH_2CH_2Cl$ |
| 60 ~~79~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trichlor-s-triazin | 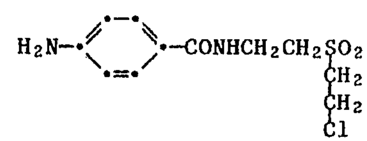 |
| 61 ~~80~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trichlor-s-triazin | 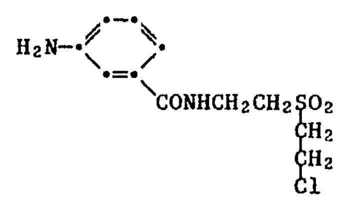 |

| No. | Monoazofarbstoff | Kupplungskomponente | Reaktivkomponente | Amin |
|---|---|---|---|---|
| ~~81~~ 62 | 2-Naphthylamin-4,6,8-trisulfonsäure → 1-Amino-2-methoxy-5-methylbenzol | 1-Amino-8-hydroxynaphthalin-3,6-disulfonsäure | 2,4,6-Trichlor-s-triazin | 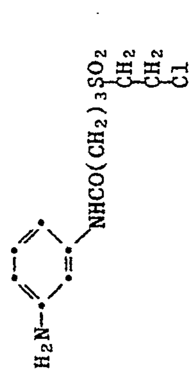 |
| ~~82~~ | ~~2-Naphthylamin-4,6,8-trisulfonsäure → 1-Amino-2-methoxy-5-methylbenzol~~ | ~~1-Amino-8-hydroxynaphthalin-3,6-disulfonsäure~~ | ~~4-(β-Chloräthylsulfonyl)-buttersäurechlorid~~ | ~~—~~ |
| ~~83~~ | ~~2-Naphthylamin-4,6,8-trisulfonsäure → 1-Amino-2-methoxy-5-methylbenzol~~ | ~~1-Amino-8-hydroxynaphthalin-3,6-disulfonsäure~~ | ~~α,β-Dibrompropionsäurechlorid~~ | ~~—~~ |
| ~~84~~ | ~~2-Naphthylamin-4,6,8-trisulfonsäure → 1-Amino-2-methoxy-5-methylbenzol~~ | ~~1-Amino-8-hydroxynaphthalin-3,6-disulfonsäure~~ | ~~2,4,6-Trifluor-5-chlor-pyrimidin~~ | ~~—~~ |
| ~~85~~ 63 | 2-Naphthylamin-4,6,8-trisulfonsäure → 1-Amino-2,5-dimethoxybenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |
| ~~86~~ 64 | 2-Naphthylamin-4,6,8-trisulfonsäure → 1-Amino-2-methoxy-5-acetylaminobenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |
| ~~87~~ 65 | 2-Naphthylamin-4,6,8-trisulfonsäure → 1-Amino-2-äthoxy-5-methylbenzol | 1-Amino-8-hydroxynaphthalin-3,6-disulfonsäure | 2,4,6-Trichlor-s-triazin | $H_2NCH_2CH_2OCH_2CH_2SO_2CH_2CH_2Cl$ |

Beispiel 2:

15,9 g 1-Amino-8-hydroxynaphthalin-3,6-disulfonsäure werden in 300 ml Wasser bei pH 5,5 gelöst und mit 4 g Natriumfluorid versetzt. Man kühlt die Lösung auf 0 bis 2° C ab und lässt dann innerhalb 2 Minuten

7,5 g Trifluortriazin unter intensivem Rühren zutropfen. Nach Zugabe von 20 ml 2n Salzsäure wird 10 Minuten nachgerührt. Man setzt nun 16,4 g 4-Aminobenzoesäure-N'-β-(β'-chloräthylsulfonyl)-äthylamidhydrochlorid in 100 ml Wasser zu der Lösung, hält den pH-Wert bei 5,5 und lässt die Temperatur auf 20 °C ansteigen.

20 g 4-Amino-3-methoxy-6-methyl-2',5'-disulfo-1,1'-azobenzol werden analog Beispiel 1 diazotiert. Man gibt nun bei 20 °C die Diazoverbindung zu der oben hergestellten Lösung der reaktiven Kupplungskomponente und hält im Kupplungsgemisch den pH-Wert mit 20%iger Natriumcarbonatlösung auf 6,5. Nach einer Stunde Nachrühren wird der Farbstoff mit Kaliumchlorid ausgesalzen, abgesaugt, gewaschen und bei 40 °C im Vakuum getrocknet.

Der Farbstoff, der in der form der freien Säure der Formel

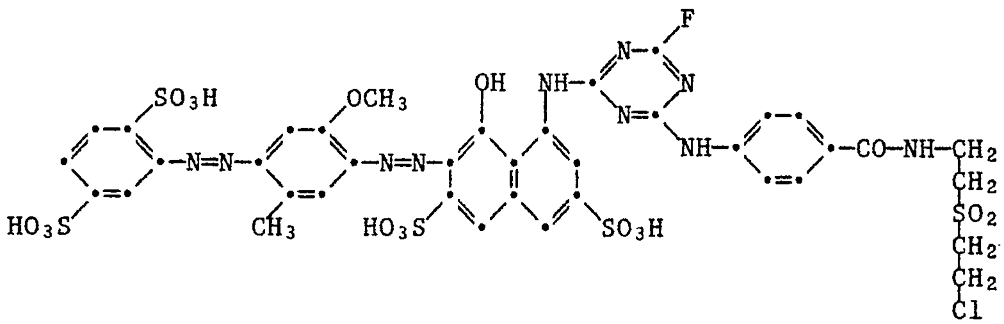

entspricht, färbt Baumwolle in blauen Tönen mit guten Echtheitseigenschaften.

Weitere Farbstoffe sind in Tabelle 2 aufgeführt.

Sowohl in Beispiel 1 wie in Beispiel 2 ist die Herstellung der in den nachfolgenden Tabellen aufgeführten Farbstoffe nicht auf die im jeweiligen Beispiel beschriebene Herstellungsvariante beschränkt. Je nach Konstitution, Löslichkeit und anderer Parameter ist es in einem Falle günstiger, zuerst auf das primäre Kondensationsprodukt aus H-Säure und Halogentriazin zu kuppeln und hernach die Kondensation mit dem Amin durchzuführen, in einem andern Fall ist es zweckmässiger wie in Beispiel 2 zu verfahren.

Tabelle 2

| No. | Monoazofarbstoff | Kupplungskomponente | Reaktivkomponente | Amin |
|---|---|---|---|---|
| 1 | 1-Aminobenzol-2,5-disulfonsäure → 1-Amino-2-methoxy-5-methylbenzol | 1-Amino-8-hydroxy-naphthalin-3,6-disulfonsäure | 2,4,6-Trifluor-s-triazin | 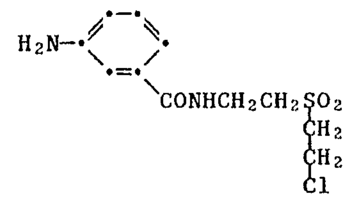 |
| 2 | 1-Aminobenzol-2,5-disulfonsäure → 1-Amino-2-methoxy-5-methylbenzol | 1-Amino-8-hydroxy-naphthalin-3,6-disulfonsäure | 2,4,6-Trifluor-s-triazin | 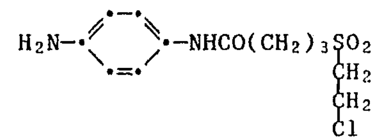 |
| 3 | 1-Aminobenzol-2,5-disulfonsäure → 1-Amino-2-methoxy-5-methylbenzol | 1-Amino-8-hydroxy-naphthalin-3,6-disulfonsäure | 2,4,6-Trifluor-s-triazin | 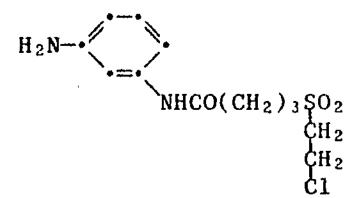 |
| 4 | 1-Aminobenzol-2,5-disulfonsäure → 1-Amino-2-methoxy-5-methylbenzol | 1-Amino-8-hydroxy-naphthalin-3,6-disulfonsäure | 2,4,6-Trifluor-s-triazin | 1-Amino-4-chlorbenzol |
| 5 | 1-Aminobenzol-2,5-disulfonsäure → 1-Amino-2-methoxy-5-methylbenzol | 1-Amino-8-hydroxy-naphthalin-3,6-disulfonsäure | 2,4-Difluor-6-methoxy-s-triazin | —— |

| No. | Monoazofarbstoff | Kupplungskomponente | Reaktivkomponente | Amin |
|---|---|---|---|---|
| ~~6~~ | ~~1-Aminobenzol-2,5-disulfonsäure → 1-Amino-2-methoxy-5-methyl-benzol~~ | ~~1-Amino-8-hydroxy-naphthalin-3,6-disulfonsäure~~ | ~~2,4,6-Trifluor-5-chlorpyrimidin~~ | |
| 6 ~~7~~ | 1-Aminobenzol-2,5-disulfonsäure → 1-Amino-2-methoxy-5-acetyl-aminobenzol | 1-Amino-8-hydroxy-naphthalin-3,6-disulfonsäure | 2,4,6-Trichlor-s-triazin | 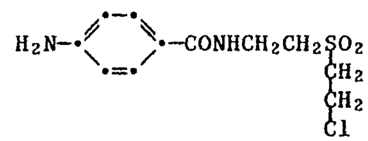 |
| 7 ~~8~~ | 1-Aminobenzol-2,5-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | 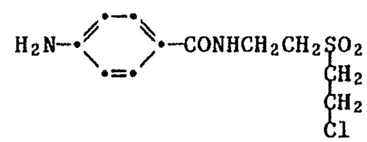 |
| 8 ~~9~~ | 1-Aminobenzol-2,5-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | 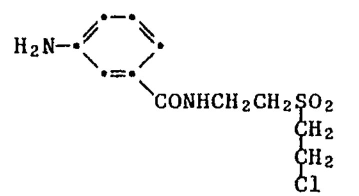 |
| 9 ~~10~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trifluor-s-triazin | 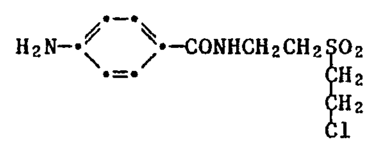 |
| 10 ~~11~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trifluor-s-triazin | 1-Amino-2-methylbenzol |

| No. | Monoazofarbstoff | Kupplungskomponente | Reaktivkomponente | Amin |
|---|---|---|---|---|
| 11 ~~12~~ | 1-Aminobenzol-2,4-disulfonsäure → 1-Amino-2-methoxy-5-methyl-benzol | 1-Amino-8-hydroxy-naphthalin-3,6-disulfonsäure | 2,4,6-Trifluor-s-triazin | 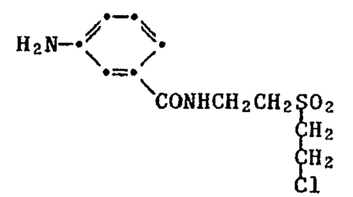 |
| 12 ~~13~~ | 1-Aminobenzol-2,4-disulfonsäure → 1-Amino-2-methoxy-5-methyl-benzol | 1-Amino-8-hydroxy-naphthalin-3,6-disulfonsäure | 2,4-Difluor-6-iso-propoxy-s-triazin | —— |
| 13 ~~14~~ | 1-Aminobenzol-2,4-disulfonsäure → 1-Amino-2-methoxy-5-acetyl-aminobenzol | 1-Amino-8-hydroxy-naphthalin-3,6-disulfonsäure | 2,4,6-Trichlor-s-triazin | 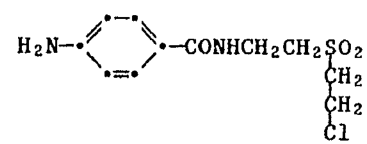 |
| 14 ~~15~~ | 1-Aminobenzol-2,4-disulfonsäure → 1-Amino-2-äthoxy-5-acetyl-aminobenzol | 1-Amino-8-hydroxy-naphthalin-3,6-disulfonsäure | 2,4,6-Trichlor-s-triazin | 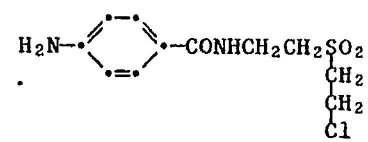 |
| 15 ~~16~~ | 1-Aminobenzol-2,4-disulfonsäure → 1-Amino-2-äthoxy-5-acetyl-aminobenzol | 1-Amino-8-hydroxy-naphthalin-4,6-disulfonsäure | 2,4,6-Trifluor-s-triazin | 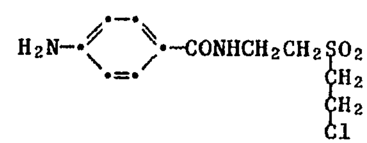 |

| No. | Monoazofarbstoff | Kupplungskomponente | Reaktivkomponente | Amin |
|---|---|---|---|---|
| 16 ~~17~~ | 2-Naphthylamin-1,5-disulfonsäure → 1-Amino-2-methoxy-5-acetyl-aminobenzol | 1-Amino-8-hydroxy-naphthalin-3,6-disulfonsäure | 2,4,6-Trifluor-s-triazin | 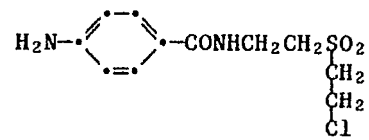 |
| 17 ~~18~~ | 2-Naphthylamin-4,8-disulfonsäure → 1-Amino-2-methoxy-5-methyl-benzol | 1-Amino-8-hydroxy-naphthalin-3,6-disulfonsäure | 2,4,6-Trifluor-s-triazin | 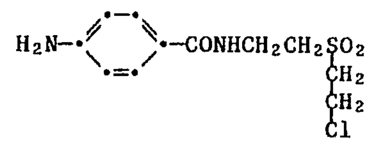 |
| 18 ~~19~~ | 2-Naphthylamin-4,8-disulfonsäure → 1-Amino-2-methoxy-5-methyl-benzol | 1-Amino-8-hydroxy-naphthalin-3,6-disulfonsäure | 2,4,6-Trifluor-s-triazin | 1-Amino-2-methylbenzol |
| 19 ~~20~~ | 2-Naphthylamin-4,8-disulfonsäure → 1-Amino-2-methoxy-5-methyl-benzol | 1-Amino-8-hydroxy-naphthalin-3,6-disulfonsäure | 2,4,6-Trichlor-s-triazin | 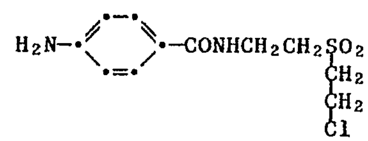 |
| 20 ~~21~~ | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trichlor-s-triazin | 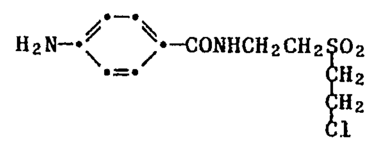 |

| | No. | Monoazofarbstoff | Kupplungskomponente | Reaktivkomponente | Amin |
|---|---|---|---|---|---|
| 21 | 22 | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trichlor-s-triazin | 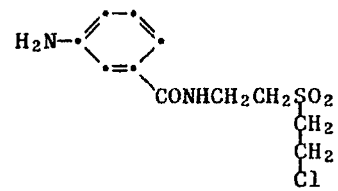 |
| 22 | 23 | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trifluor-s-triazin | 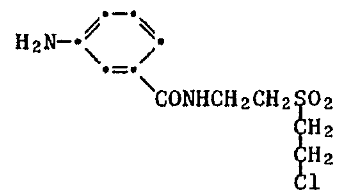 |
| 23 | 24 | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trifluor-s-triazin | 1-Amino-3-chlorbenzol |
| 24 | 25 | 2-Naphthylamin-4,8-disulfonsäure → 1-Amino-2-methoxy-5-acetyl-aminobenzol | 1-Amino-8-hydroxy-naphthalin-3,6-disulfonsäure | 2,4,6-Trifluor-s-triazin | 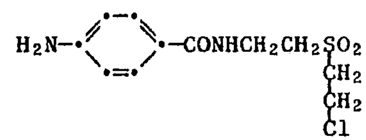 |
| 25 | 26 | 2-Naphthylamin-5,7-disulfonsäure → 1-Amino-2-methoxy-5-methyl-benzol | 1-Amino-8-hydroxy-naphthalin-3,6-disulfonsäure | 2,4,6-Trifluor-s-triazin | 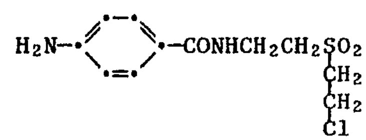 |

| No. | Monoazofarbstoff | Kupplungskomponente | Reaktivkomponente | Amin |
|---|---|---|---|---|
| ~~27~~ 26 | 2-Naphthylamin-3,6-disulfonsäure → 1-Amino-2-methoxy-5-methyl-benzol | 1-Amino-8-hydroxy-naphthalin-3,6-disulfonsäure | 2,4,6-Trifluor-s-triazin | 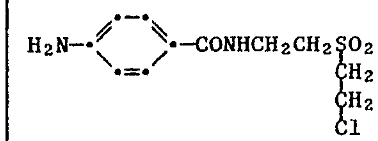 |
| ~~28~~ 27 | 2-Naphthylamin-3,6-disulfonsäure → 1-Amino-2-methoxy-5-methyl-benzol | 1-Amino-8-hydroxy-naphthalin-3,6-disulfonsäure | 2,4,6-Trichlor-s-triazin | 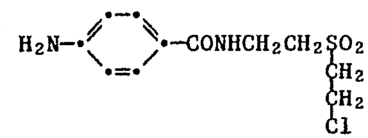 |
| ~~29~~ 28 | 2-Naphthylamin-3,6-disulfonsäure → 1-Amino-2-methoxy-5-acetyl-aminobenzol | 1-Amino-8-hydroxy-naphthalin-3,6-disulfonsäure | 2,4,6-Trichlor-s-triazin | 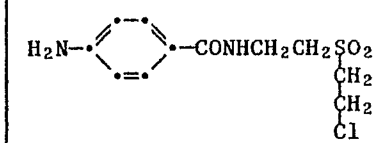 |
| ~~30~~ 29 | 2-Naphthylamin-3,6-disulfonsäure → 1-Amino-2-methoxy-5-acetyl-aminobenzol | 1-Amino-8-hydroxy-naphthalin-3,6-disulfonsäure | 2,4,6-Trifluor-s-triazin | 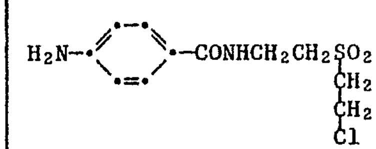 |
| ~~31~~ 30 | 2-Naphthylamin-6,8-disulfonsäure → 1-Amino-2-methoxy-5-methyl-benzol | 1-Amino-8-hydroxy-naphthalin-3,6-disulfonsäure | 2,4,6-Trifluor-s-triazin | 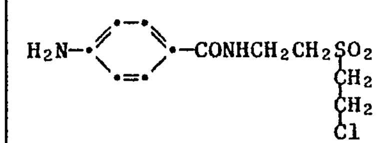 |
| ~~32~~ 31 | 2-Naphthylamin-6,8-disulfonsäure → 1-Amino-2-methoxy-5-methyl-benzol | 1-Amino-8-hydroxy-naphthalin-3,6-disulfonsäure | 2,4,6-Trifluor-s-triazin | N-Aethylaminobenzol |

| No. | Monoazofarbstoff | Kupplungskomponente | Reaktivkomponente | Amin |
|---|---|---|---|---|
| ~~33~~ 32 | 2-Naphthylamin-6,8-disulfonsäure → 1-Amino-2-methoxy-5-methylbenzol | 1-Amino-8-hydroxynaphthalin-3,6-disulfonsäure | 2,4,6-Trifluor-s-triazin | 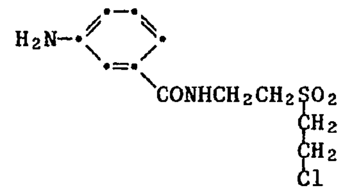 |
| ~~34~~ 33 | 2-Naphthylamin-6,8-disulfonsäure → 1-Amino-2-methoxy-5-acetylaminobenzol | 1-Amino-8-hydroxynaphthalin-3,6-disulfonsäure | 2,4,6-Trifluor-s-triazin | 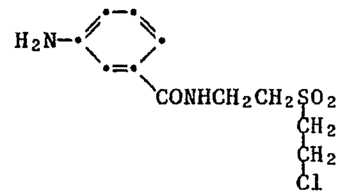 |
| ~~35~~ 34 | 2-Naphthylamin-6,8-disulfonsäure → 1-Amino-2-methoxy-5-acetylaminobenzol | 1-Amino-8-hydroxynaphthalin-3,6-disulfonsäure | 2,4,6-Trichlor-s-triazin | 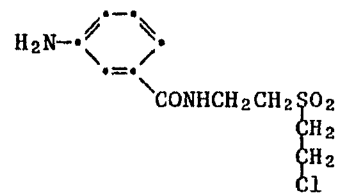 |
| ~~36~~ 35 | 2-Naphthylamin-6,8-disulfonsäure → 1-Amino-2-methoxy-5-sulfoacetylaminobenzol | 1-Amino-8-hydroxynaphthalin-3,6-disulfonsäure | 2,4,6-Trichlor-s-triazin | 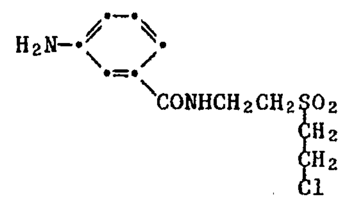 |

| No. | Monoazofarbstoff | Kupplungskomponente | Reaktivkomponente | Amin |
|---|---|---|---|---|
| 36 ~~37~~ | 2-Naphthylamin-6,8-disulfonsäure → 1-Amino-2-methoxy-5-sulfo-acetylaminobenzol | 1-Amino-8-hydroxy-naphthalin-3,6-disulfonsäure | 2,4,6-Trichlor-s-triazin | 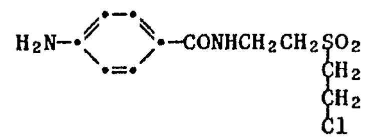 |
| 37 ~~38~~ | 2-Naphthylamin-6,8-disulfonsäure → 1-Amino-2-methoxy-5-sulfo-acetylaminobenzol | 1-Amino-8-hydroxy-naphthalin-3,6-disulfonsäure | 2,4,6-Trifluor-s-triazin | 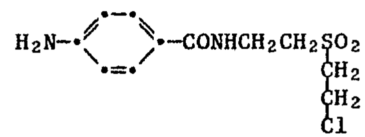 |
| 38 ~~39~~ | 2-Naphthylamin-6,8-disulfonsäure → 1-Amino-2-methoxy-5-sulfo-acetylaminobenzol | 1-Amino-8-hydroxy-naphthalin-3,6-disulfonsäure | 2,4,6-Trifluor-s-triazin | N-(2-Hydroxyäthyl)-amino-benzol |
| 39 ~~40~~ | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 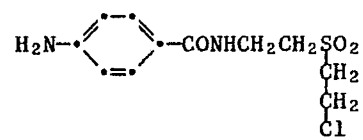 |
| 40 ~~41~~ | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 1-Amino-2-methylbenzol |
| 41 ~~42~~ | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 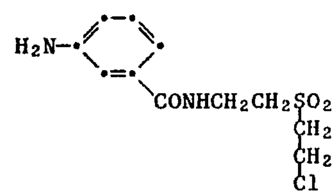 |

| No. | Monoazofarbstoff | Kupplungskomponente | Reaktivkomponente | Amin |
|---|---|---|---|---|
| 42 ~~43~~ | 2-Naphthylamin-3,6,8-trisulfonsäure → 1-Amino-2-methoxy-5-methylbenzol | 1-Amino-8-hydroxy-naphthalin-4,6-disulfonsäure | 2,4,6-Trifluor-s-triazin | 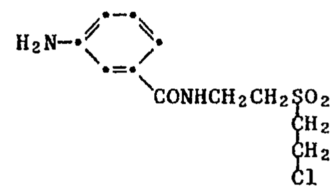 |
| 43 ~~44~~ | 2-Naphthylamin-3,6,8-trisulfonsäure → 1-Amino-2-methoxy-5-methylbenzol | 1-Amino-8-hydroxy-naphthalin-3,6-disulfonsäure | 2,4,6-Trichlor-s-triazin | 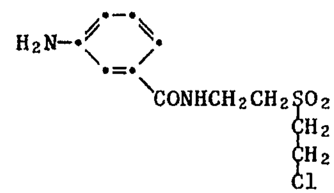 |
| 44 ~~45~~ | 2-Naphthylamin-3,6,8-trisulfonsäure → 1-Amino-2,5-dimethoxy-benzol | 1-Amino-8-hydroxy-naphthalin-3,6-disulfonsäure | 2,4,6-Trifluor-s-triazin | 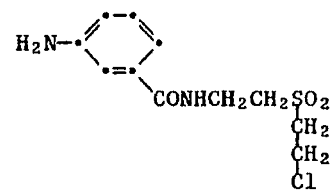 |
| 45 ~~46~~ | 2-Naphthylamin-3,6,8-trisulfonsäure → 1-Amino-5-acetylamino-benzol | 1-Amino-8-hydroxy-naphthalin-3,6-disulfonsäure | 2,4,6-Trifluor-s-triazin | 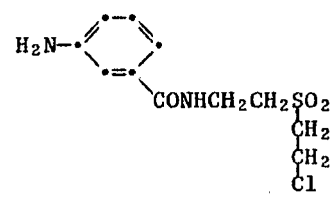 |

| No. | Monoazofarbstoff | Kupplungskomponente | Reaktivkomponente | Amin |
|---|---|---|---|---|
| 46 ~~47~~ | 2-Naphthylamin-3,6,8-trisulfonsäure → 1-Amino-5-acetylaminobenzol | 1-Amino-8-hydroxynaphthalin-3,6-disulfonsäure | 2,4,6-Trifluor-s-triazin | 1-Amino-4-chlorbenzol |
| 47 ~~48~~ | 2-Naphthylamin-3,6,8-trisulfonsäure → 1-Amino-2-methoxy-5-acetylaminoenzol | 1-Amino-8-hydroxynaphthalin-3,6-disulfonsäure | 2,4,6-Trifluor-s-triazin | 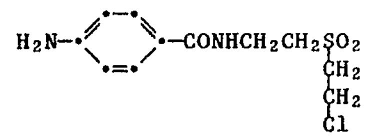 |
| 48 ~~49~~ | 2-Naphthylamin-3,6,8-trisulfonsäure → 1-Amino-2-methoxy-5-acetylaminoenzol | 1-Amino-8-hydroxynaphthalin-3,6-disulfonsäure | 2,4,6-Trichlor-s-triazin | 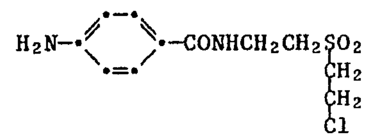 |
| 49 ~~50~~ | 2-Naphthylamin-3,6,8-trisulfonsäure → 1-Amino-5-acetylaminobenzol | 1-Amino-8-hydroxynaphthalin-3,6-disulfonsäure | 2,4,6-Trichlor-s-triazin | 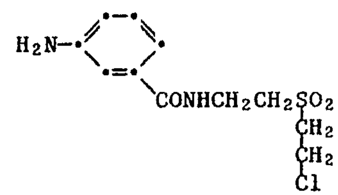 |
| 50 ~~51~~ | 2-Naphthylamin-3,6,8-trisulfonsäure → 1-Amino-2-methoxy-5-sulfoacetylaminobenzol | 1-Amino-8-hydroxynaphthalin-3,6-disulfonsäure | 2,4,6-Trifluor-s-triazin | 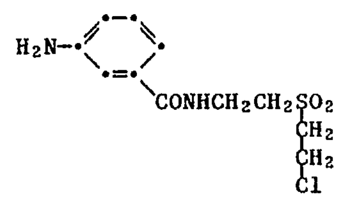 |

| No. | Monoazofarbstoff | Kupplungskomponente | Reaktivkomponente | Amin |
|---|---|---|---|---|
| 51 ~~52~~ | 2-Naphthylamin-3,6,8-trisulfonsäure → 1-Amino-2-methoxy-5-sulfoacetylaminobenzol | 1-Amino-8-hydroxy-naphthalin-3,6-disulfonsäure | 2,4,6-Trichlor-s-triazin | 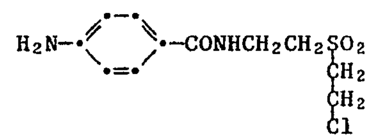 |
| 52 ~~53~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 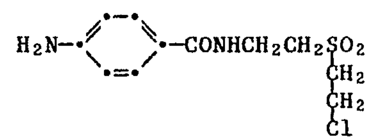 |
| 53 ~~54~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 1-Amino-3-chlorbenzol |
| 54 ~~55~~ | 2-Naphthylamin-4,6,8-trisulfonsäure → 1-Amino-2-methoxy-5-methylbenzol | 1-Amino-8-hydroxy-naphthalin-3,6-disulfonsäure | 2,4,6-Trifluor-s-triazin | 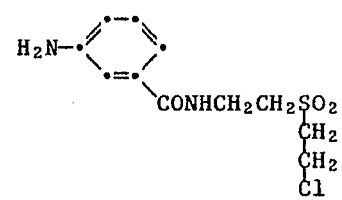 |
| 55 ~~56~~ | 2-Naphthylamin-4,6,8-trisulfonsäure → 1-Amino-2,5-dimethoxy-benzol | 1-Amino-8-hydroxy-naphthalin-3,6-disulfonsäure | 2,4,6-Trifluor-s-triazin | 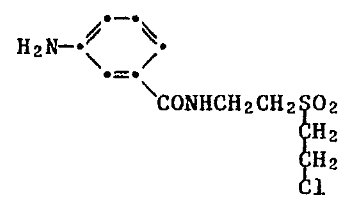 |

| No. | Monoazofarbstoff | Kupplungskomponente | Reaktivkomponente | Amin |
|---|---|---|---|---|
| 56 ~~57~~ | 2-Naphthylamin-4,6,8-trisulfonsäure → 1-Amino-2,5-dimethoxybenzol | 1-Amino-8-hydroxynaphthalin-3,6-disulfonsäure | 2,4,6-Trichlor-s-triazin | 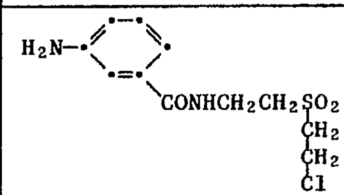 |
| 57 ~~58~~ | 2-Naphthylamin-4,6,8-trisulfonsäure → 1-Amino-2,5-dimethoxybenzol | 1-Amino-8-hydroxynaphthalin-3,6-disulfonsäure | 2,4,6-Trifluor-s-triazin | 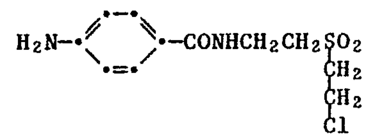 |
| 58 ~~59~~ | 2-Naphthylamin-4,6,8-trisulfonsäure → 1-Amino-2-methoxy-5-acetylaminobenzol | 1-Amino-8-hydroxynaphthalin-3,6-disulfonsäure | 2,4,6-Trifluor-s-triazin | 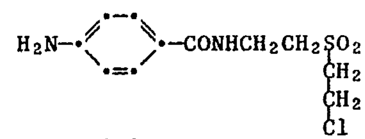 |
| 59 ~~60~~ | 2-Naphthylamin-4,6,8-trisulfonsäure → 1-Amino-2-methoxy-5-acetylaminobenzol | 1-Amino-8-hydroxynaphthalin-3,6-disulfonsäure | 2,4,6-Trifluor-s-triazin | 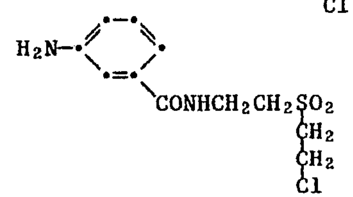 |
| 60 ~~61~~ | 2-Naphthylamin-4,6,8-trisulfonsäure → 1-Amino-2-methoxy-5-acetylaminobenzol | 1-Amino-8-hydroxynaphthalin-3,6-disulfonsäure | 2,4,6-Trichlor-s-triazin | 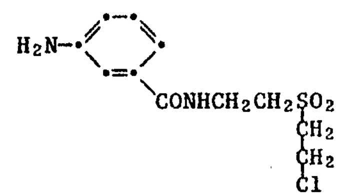 |

| No. | Monoazofarbstoff | Kupplungskomponente | Reaktivkomponente | Amin |
|---|---|---|---|---|
| ~~62~~ 61 | 2-Naphthylamin-4,6,8-trisulfonsäure → 1-Amino-2-methoxy-5-sulfoacetylaminobenzol | 1-Amino-8-hydroxy-naphthalin-3,6-disulfonsäure | 2,4,6-Trichlor-s-triazin | 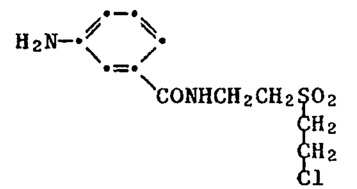 |
| ~~63~~ 62 | 2-Naphthylamin-4,6,8-trisulfonsäure → 1-Amino-2-methoxy-5-acetylaminobenzol | 1-Amino-8-hydroxy-naphthalin-3,6-disulfonsäure | 2,4,6-Trichlor-s-triazin | 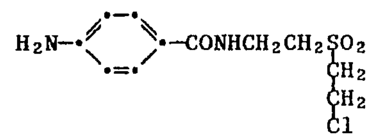 |
| ~~64~~ 63 | 2-Naphthylamin-4,6,8-trisulfonsäure → 1-Amino-2-methoxy-5-sulfoacetylaminobenzol | 1-Amino-8-hydroxy-naphthalin-3,6-disulfonsäure | 2,4,6-Trifluor-s-triazin | 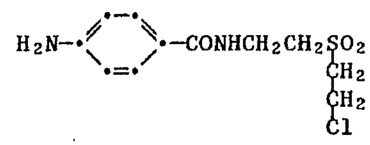 |
| ~~65~~ 64 | 2-Naphthylamin-4,6,8-trisulfonsäure → 1-Amino-2-methoxy-5-sulfoacetylaminobenzol | 1-Amino-8-hydroxy-naphthalin-3,6-disulfonsäure | 2,4,6-Trifluor-s-triazin | 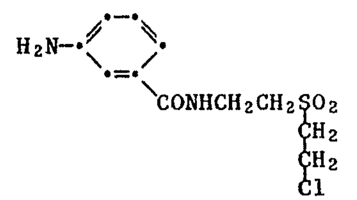 |

Beispiel 3:

31,9 g 1-Amino-8-hydroxynaphthalin-3,6-disulfonsäure werden gemäss den Angaben in Beispiel 1 mit 18,5 g Cyanurchlorid umgesetzt.

In analoger Weise diazotiert und kuppelt man 50,9 g 4-Amino-3-methoxy-6-methyl-2'-sulfo-4'-β-sulfoäthylsulfon-1,1'-azobenzol gemäss Angaben des Beispiels 1.

Nach beendigter Kupplung versetzt man das Reaktionsgemisch mit 26,5 g 2-(β-Aminoäthoxy)-2'-chlor-diäthylsulfon-hydrochlorid, kondensiert und isoliert ebenfalls gemäss den Angaben des Beispiels 1. Der Farbstoff der in der Form der freien Säure der Formel

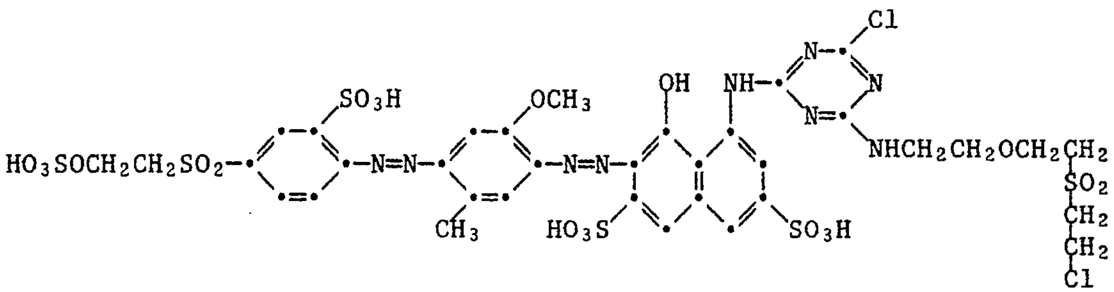

entspricht, färbt Baumwolle in blauen Tönen mit guten Echtheitseigenschaften.

Analog lassen sich die in Tabelle 3 genannten Farbstoffe herstellen.

Tabelle 3

| No. | Monoazofarbstoff | Kupplungskomponente | Reaktivkomponente | Amin |
|---|---|---|---|---|
| 1 | 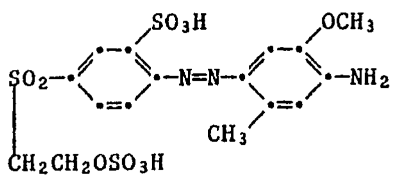 | 1-Amino-8-hydroxy-naphthalin-3,6-disulfonsäure | 2,4,6-Trichlor-s-triazin | $H_2NCH_2CH_2SO_2CH_2CH_2Cl$ |
| 2 | 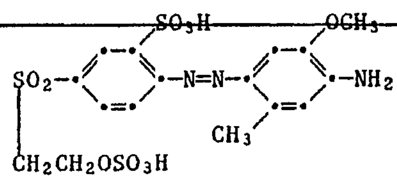 | 1-Amino-8-hydroxy-naphthalin-3,6-disulfonsäure | 2,4,6-Trichlor-s-triazin | 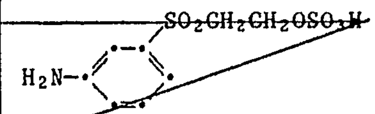 |
| 3 | 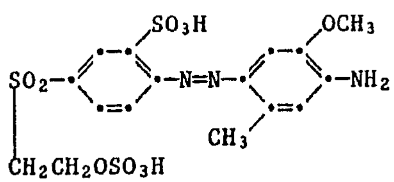 | 1-Amino-8-hydroxy-naphthalin-3,6-disulfonsäure | 2,4,6-Trichlor-s-triazin | 1-Aminobenzol-3-sulfonsäure |
| 4 | 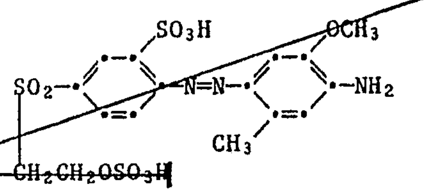 | 1-Amino-8-hydroxy-naphthalin-3,6-disulfonsäure | 4-(β-Chloräthyl-sulfonyl)-buttersäurechlorid | —— |

| No. | Monoazofarbstoff | Kupplungskomponente | Reaktivkomponente | Amin |
|---|---|---|---|---|
| ~~5~~ | 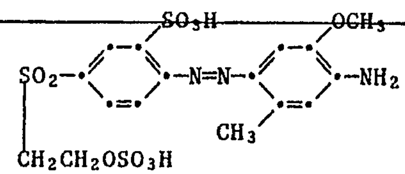 | ~~1-Amino-8-hydroxy-~~ naphthalin-3,6-disulfonsäure | ~~α,β-Dibrom-~~ propionylchlorid | |
| 6 | 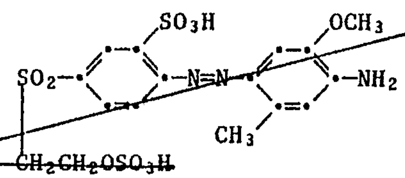 | 1-Amino-8-hydroxy-naphthalin-3,6-disulfonsäure | 2,4,6-Trifluor-5-chlorpyrimidin | —— |
| ~~7~~ 2 | 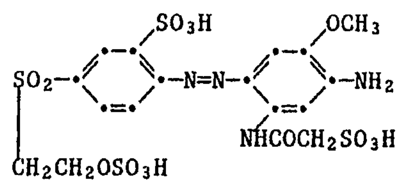 | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |

| No. | Monoazofarbstoff | Kupplungskomponente | Reaktivkomponente | Amin |
|---|---|---|---|---|
| ~~8~~ 3 | 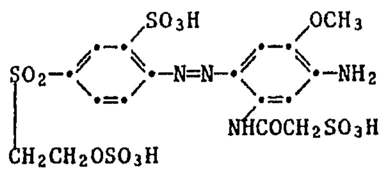 | 1-Amino-8-hydroxy-naphthalin-3,6-disulfonsäure | 2,4,6-Trichlor-s-triazin | $H_2NCH_2CH_2SO_2CH_2CH_2Cl$ |
| ~~19~~ | 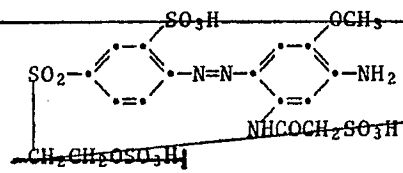 | ~~1-Amino-8-hydroxy-naphthalin-3,6-disulfonsäure~~ | ~~2,4,6-Trichlor-s-triazin~~ | 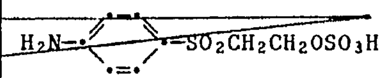 |
| ~~10~~ 4 | 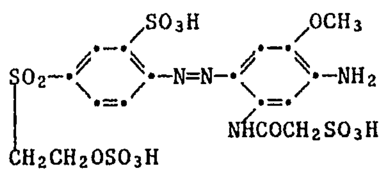 | 1-Amino-8-hydroxy-naphthalin-3,6-disulfonsäure | 2,4,6-Trichlor-s-triazin | 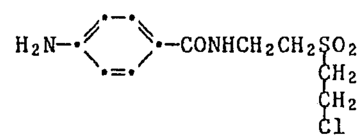 |
| ~~11~~ | 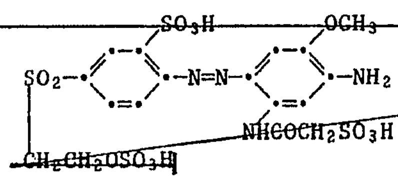 | ~~1-Amino-8-hydroxy-naphthalin-3,6-disulfonsäure~~ | ~~4-(β-Chloräthyl-sulfonyl)-buttersäurechlorid~~ | |

| No. | Monoazofarbstoff | Kupplungskomponente | Reaktivkomponente | Amin |
|---|---|---|---|---|
| ~~12~~ | 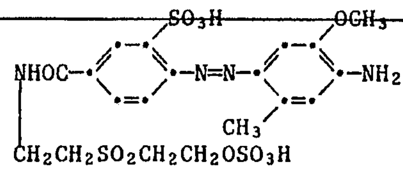 | ~~1-Amino-8-hydroxy-naphthalin-3,6-disulfonsäure~~ | ~~2,4,6-Trichlor-s-triazin~~ | 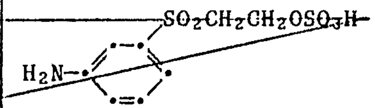 |
| 13 | 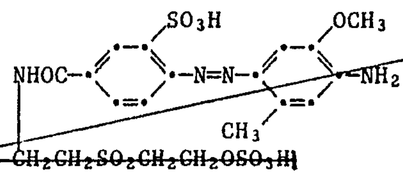 | 1-Amino-8-hydroxy-naphthalin-3,6-disulfonsäure | 2,4,6-Trichlor-s-triazin | 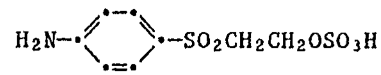 |
| ~~14~~ 5 | 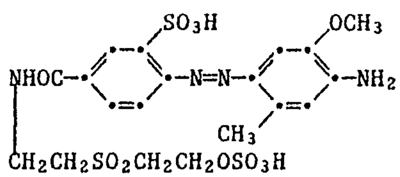 | 1-Amino-8-hydroxy-naphthalin-3,6-disulfonsäure | 2,4,6-Trichlor-s-triazin | 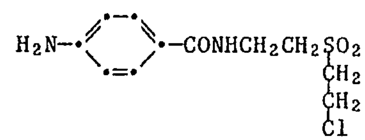 |
| ~~15~~ 6 | 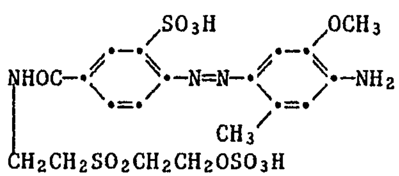 | 1-Amino-8-hydroxy-naphthalin-3,6-disulfonsäure | 2,4,6-Trichlor-s-triazin | $H_2NCH_2CH_2SO_2CH_2CH_2Cl$ |

| No. | Monoazofarbstoff | Kupplungskomponente | Reaktivkomponente | Amin |
|---|---|---|---|---|
| 7 ~~16~~ | 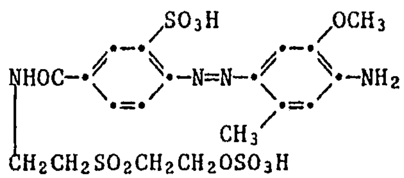 | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 8 ~~17~~ | 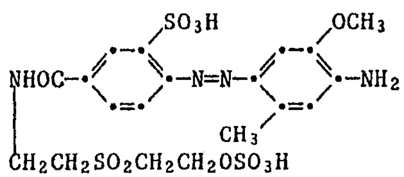 | 1-Amino-8-hydroxy-naphthalin-4,6-disulfonsäure | 2,4,6-Trichlor-s-triazin | $H_2NCH_2CH_2OCH_2CH_2SO_2CH_2CH_2Cl$ |
| ~~18~~ | 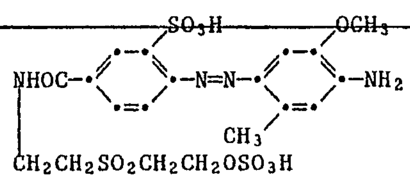 | ~~1-Amino-8-hydroxy-naphthalin-3,6-disulfonsäure~~ | ~~4-(β-Chloräthylsulfonyl)-buttersäurechlorid~~ | |
| ~~19~~ | 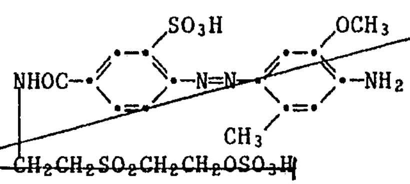 | ~~1-Amino-8-hydroxy-naphthalin-3,6-disulfonsäure~~ | ~~α,β-Dibrom-propionylchlorid~~ | ~~—~~ |

| No. | Monoazofarbstoff | Kupplungskomponente | Reaktivkomponente | Amin |
|---|---|---|---|---|
| ~~20~~ | 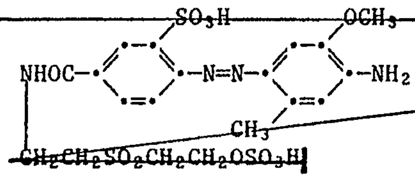 | ~~1-Amino-8-hydroxy-naphthalin-3,6-disulfonsäure~~ | ~~2,4,6-Trifluor-5-chlorpyrimidin~~ | |
| 9 (~~21~~) | 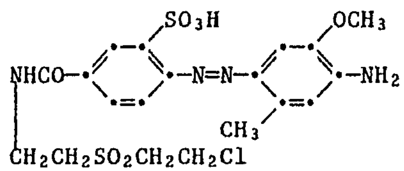 | 1-Amino-8-hydroxy-naphthalin-3,6-disulfonsäure | 2,4,6-Trichlor-s-triazin | $H_2NCH_2CH_2SO_2CH_2CH_2Cl$ |
| 10 (~~22~~) | 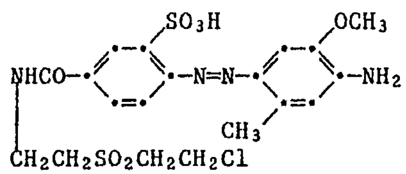 | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |
| 11 (~~23~~) | 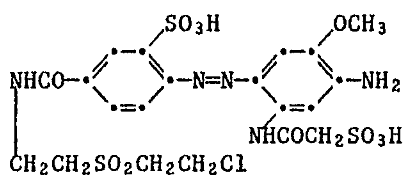 | 1-Amino-8-hydroxy-naphthalin-3,6-disulfonsäure | 2,4,6-Trichlor-s-triazin | $H_2NCH_2CH_2OCH_2CH_2SO_2CH_2CH_2Cl$ |

| No. | Monoazofarbstoff | Kupplungskomponente | Reaktivkomponente | Amin |
|---|---|---|---|---|
| 12 (~~32~~) | 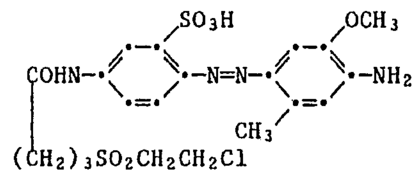 | 1-Amino-8-hydroxy-naphthalin-3,6-disulfonsäure | 2,4,6-Trichlor-s-triazin | $H_2NCH_2CH_2OCH_2CH_2SO_3CH_2CH_2Cl$ |
| 13 (~~33~~) | 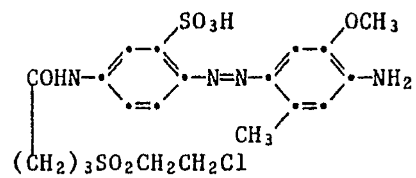 | 1-Amino-8-hydroxy-naphthalin-3,6-disulfonsäure | 2,4,6-Trichlor-s-triazin | $H_2NCH_2CH_2SO_3CH_2CH_2Cl$ |
| 14 (~~34~~) | 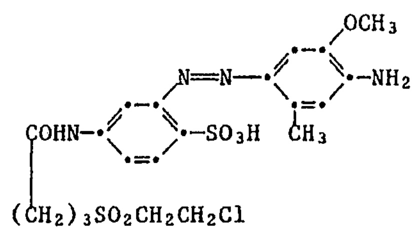 | 1-Amino-8-hydroxy-naphthalin-3,6-disulfonsäure | 2,4,6-Trichlor-s-triazin | $H_2NCH_2CH_2OCH_2SO_2CH_2CH_2Cl$ |
| ~~35~~ | 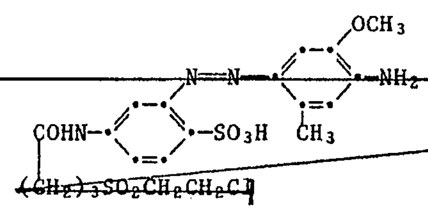 | ~~1-Amino-8-hydroxy-naphthalin-3,6-disulfonsäure~~ | ~~4-(β-Chloräthyl-sulfonyl)-buttersäurechlorid~~ | |

Beispiel 4:

15,9 g 1-Amino-8-hydroxynaphthalin-3,6-disulfonsäure werden gemäss den Angaben in Beispiel 2 mit 7,5 g 2,4,6-Trifluortriazin und anschliessend mit 16,4 g 3-Aminobenzoesäure-N'-β-(β'-chloräthyl-sulfonyl)-

äthylamid-Hydrochlorid umgesetzt.

In analoger Weise diazotiert und kuppelt man 25,4 g 4-Amino-3-methoxy-6-methyl-2'-sulfo-4'-$\beta$'-sulfatoäthylsulfon-1,1'-azobenzol gemäss den Angaben des Beisiels 1.

Nach beendigter Kupplung wird der Farbstoff der Formel

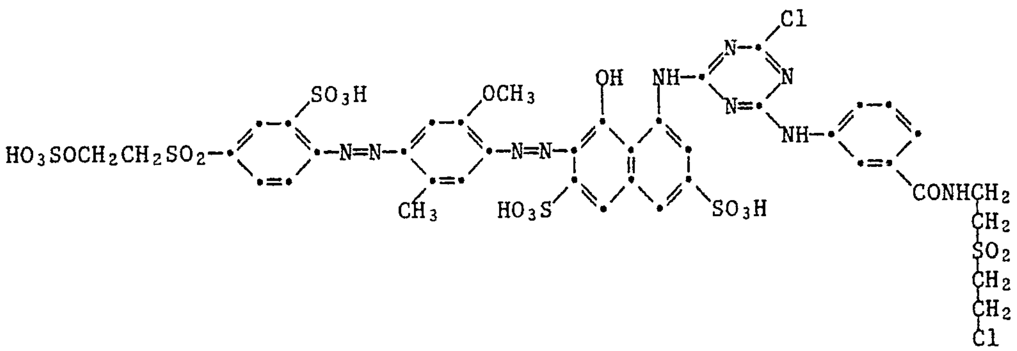

durch Aussalzen isoliert. Es stellt getrocknet ein blau-schwarzes Pulver dar und färbt Baumwolle in blauen Tönen mit guten Echtheitseigenschaften.

Analog lassen sich die in Tabelle 4 genannten Farbstoffe herstellen.

Tabelle 4

| No. | Monoazofarbstoff | Kupplungskomponente | Reaktivkomponente | Amin |
|---|---|---|---|---|
| ~~1~~ | 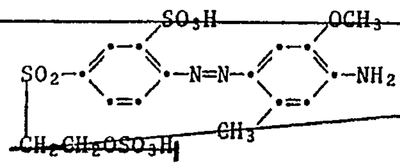 | ~~1-Amino-8-hydroxy-naphthalin-3,6-disulfonsäure~~ | ~~2,4,6-Trifluor-s-triazin~~ | 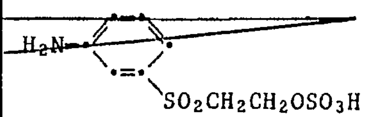 |
| ~~2~~ 1 | 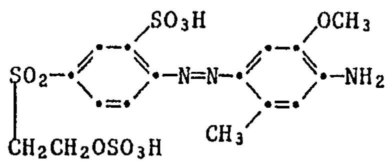 | 1-Amino-8-hydroxy-naphthalin-3,6-disulfonsäure | 2,4,6-Trifluor-s-triazin | 1-Amino-4-chlorbenzol |
| ~~3~~ 2 | 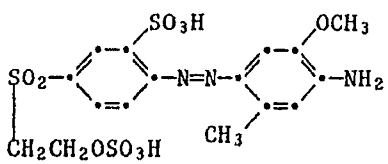 | 1-Amino-8-hydroxy-naphthalin-3,6-disulfonsäure | 2,4,6-Trifluor-s-triazin | 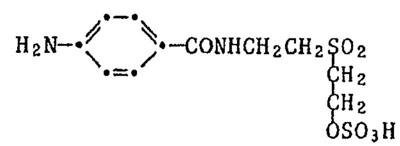 |
| ~~4~~ 3 | 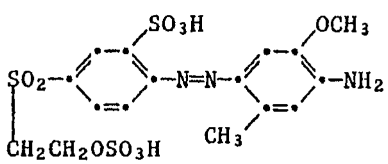 | 1-Amino-8-hydroxy-naphthalin-4,6-disulfonsäure | 2,4,6-Trifluor-s-triazin | 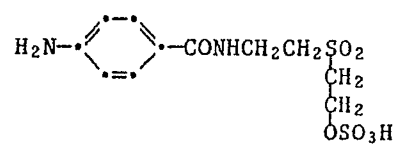 |
| ~~5~~ 4 | 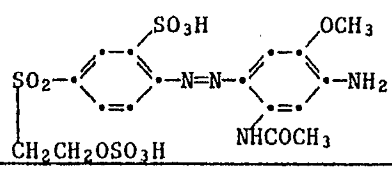 | 1-Amino-8-hydroxy-naphthalin-3,6-disulfonsäure | 2,4,6-Trifluor-s-triazin | 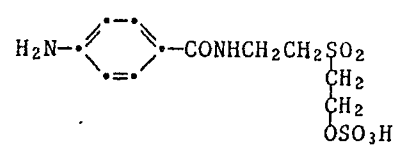 |

| No. | Monoazofarbstoff | Kupplungskomponente | Reaktivkomponente | Amin |
|---|---|---|---|---|
| ~~6~~ | 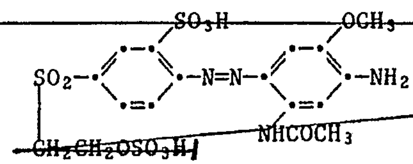 | ~~1-Amino-8-hydroxy-naphthalin-3,6-disulfonsäure~~ | ~~2,4,6-Trifluor-s-triazin~~ | 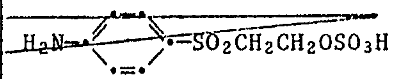 |
| 5 ~~7~~ | 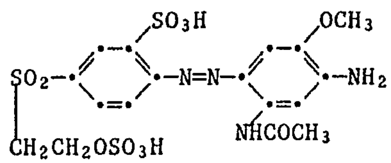 | 1-Amino-8-hydroxy-naphthalin-3,6-disulfonsäure | 2,4,6-Trifluor-s-triazin | N-Aethylaminobenzol |
| 6 ~~8~~ | 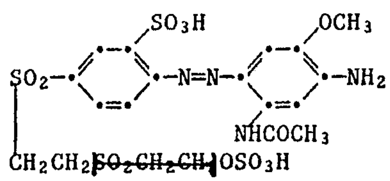 | 1-Amino-8-hydroxy-naphthalin-3,6-disulfonsäure | 2,4,6-Trifluor-s-triazin | 1-Amino-3-chlorbenzol |
| ~~9~~ | 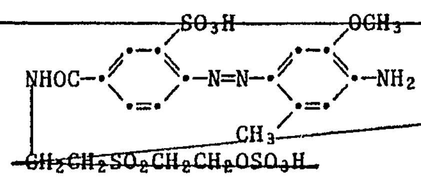 | ~~1-Amino-8-hydroxy-naphthalin-3,6-disulfonsäure~~ | ~~2,4,6-Trifluor-s-triazin~~ | 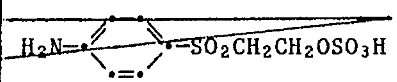 |

| No. | Monoazofarbstoff | Kupplungskomponente | Reaktivkomponente | Amin |
|---|---|---|---|---|
| 7 ~~10~~ | 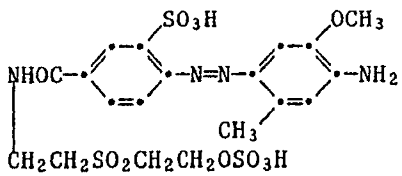 | 1-Amino-8-hydroxy-naphthalin-3,6-disulfonsäure | 2,4,6-Trifluor-s-triazin | 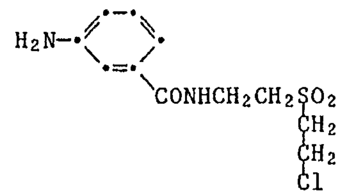 |
| 8 ~~11~~ | 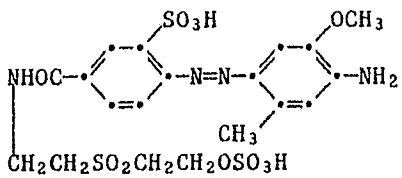 | 1-Amino-8-hydroxy-naphthalin-3,6-disulfonsäure | 2,4,6-Trifluor-s-triazin | 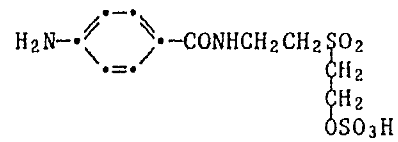 |
| 9 ~~12~~ | 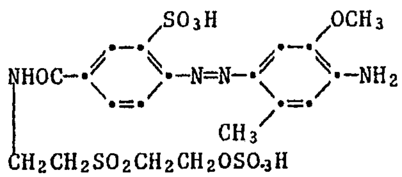 | 1-Amino-8-hydroxy-naphthalin-3,6-disulfonsäure | 2,4,6-Trifluor-s-triazin | N-Methyl-aminobenzol |
| ~~13~~ | 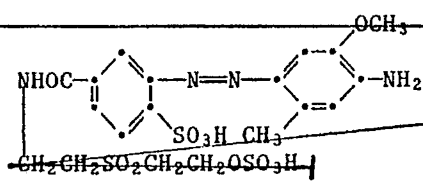 | ~~1-Amino-8-hydroxy-naphthalin-3,6-disulfonsäure~~ | ~~2,4,6-Trichlor-s-triazin~~ | 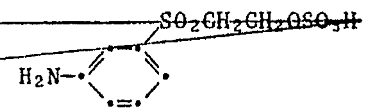 |

| No. | Monoazofarbstoff | Kupplungskomponente | Reaktivkomponente | Amin |
|---|---|---|---|---|
| ~~14~~ 10 | 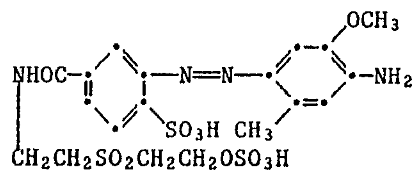 | 1-Amino-8-hydroxy-naphthalin-3,6-disulfonsäure | 2,4,6-Trichlor-s-triazin | 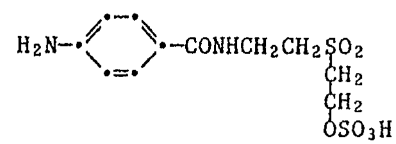 |
| ~~15~~ 11 | 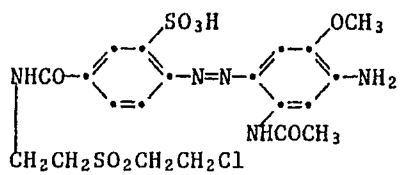 | 1-Amino-8-hydroxy-naphthalin-3,6-disulfonsäure | 2,4,6-Trichlor-s-triazin | 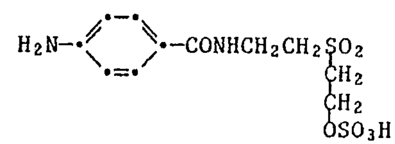 |
| ~~16~~ | 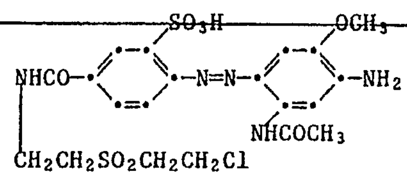 | ~~1-Amino-8-hydroxy-~~naphthalin-3,6-disulfonsäure | ~~2,4,6-Trichlor-s-~~triazin | 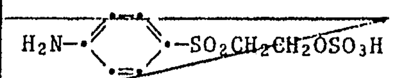 |
| 17 | 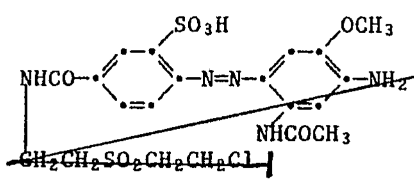 | 1-Amino-8-hydroxy-naphthalin-3,6-disulfonsäure | 2,4,6-Trichlor-s-triazin | N-Methyl-aminobenzol |

| No. | Monoazofarbstoff | Kupplungskomponente | Reaktivkomponente | Amin |
|---|---|---|---|---|
| ~~22~~ | 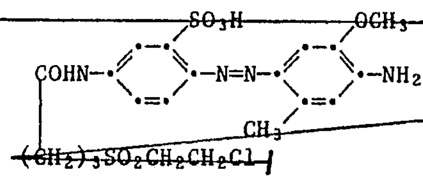 | ~~1-Amino-8-hydroxy-~~ naphthalin-3,6-disulfonsäure | ~~2,4,6-Trichlor-s-~~ triazin | 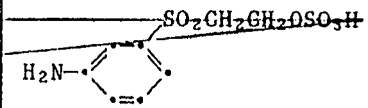 |
| 12 ~~23~~ | 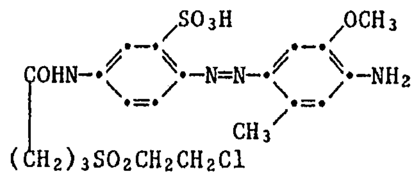 | 1-Amino-8-hydroxy-naphthalin-3,6-disulfonsäure | 2,4,6-Trichlor-s-triazin | 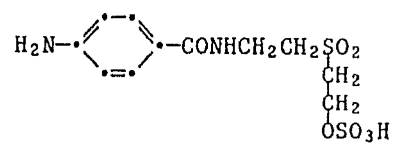 |
| 13 ~~24~~ | 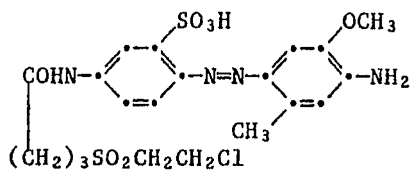 | 1-Amino-8-hydroxy-naphthalin-3,6-disulfonsäure | 2,4,6-Trichlor-s-triazin | 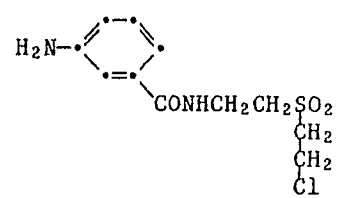 |

| No. | Monoazofarbstoff | Kupplungskomponente | Reaktivkomponente | Amin |
|---|---|---|---|---|
| ~~25~~ | 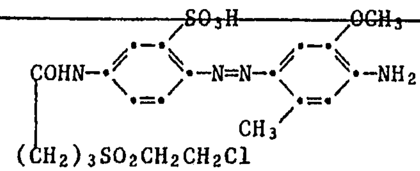 | ~~1-Amino-8-hydroxy-naphthalin-3,6-disulfonsäure~~ | ~~2,4,6-Trichlor-s-triazin~~ | ~~1-Amino-4-chlorbenzol~~ |
| 26 | 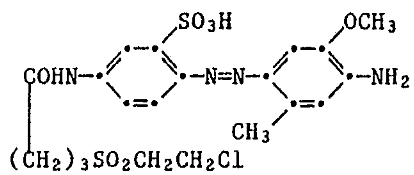 | 1-Amino-8-hydroxy-naphthalin-3,6-disulfonsäure | 2,4,6-Trichlor-s-triazin | 1-Amino-2-methylbenzol |
| 27 | 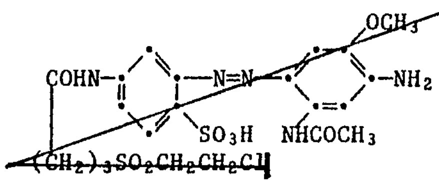 | 1-Amino-8-hydroxy-naphthalin-3,6-disulfonsäure | 2,4,6-Trifluor-s-triazin | 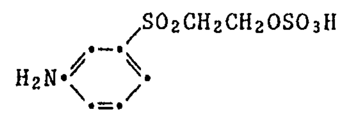 |
| ~~28~~ 14 | 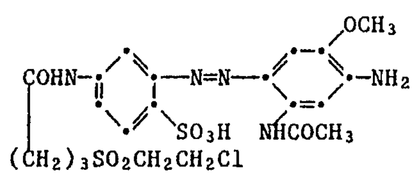 | 1-Amino-8-hydroxy-naphthalin-3,6-disulfonsäure | 2,4,6-Trifluor-s-triazin | 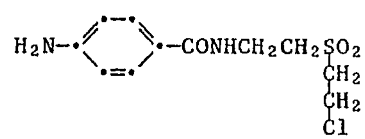 |

15

| No. | Monoazofarbstoff | Kupplungskomponente | Reaktivkomponente | Amin |
|---|---|---|---|---|
| 29 | 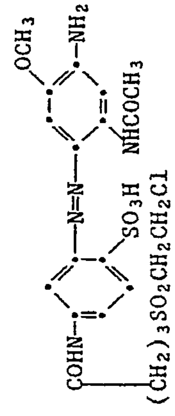 | 1-Amino-8-hydroxy-naphthalin-3,6-disulfonsäure | 2,4,6-Trifluor-s-triazin | N-Aethyl-aminobenzol |
| 30 | 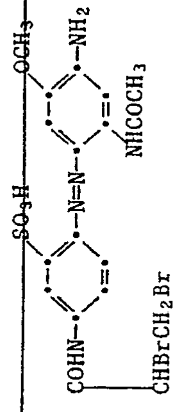 | 1-Amino-8-hydroxy-naphthalin-3,6-disulfonsäure | 2,4,6-Trifluor-s-triazin | N-(2-Hydroxyäthyl)-aminobenzol |
| 31 | 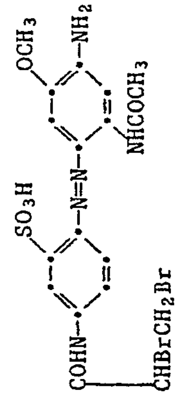 | 1-Amino-8-hydroxy-naphthalin-3,6-disulfonsäure | 2,4,6-Trifluor-s-triazin | 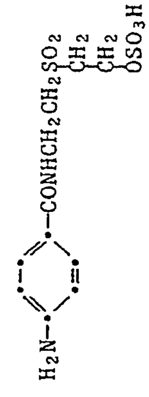 |
| 32 | 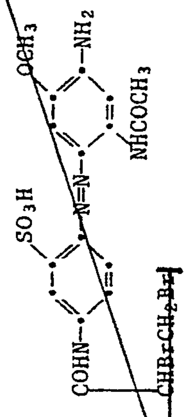 | 1-Amino-8-hydroxy-naphthalin-3,6-disulfonsäure | 2,4,6-Trifluor-s-triazin | 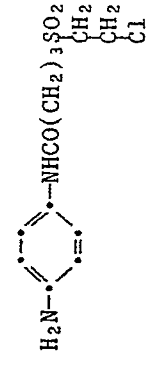 |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei

40° C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40° C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35° C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35° C gehalten. Danach wird die Temperatur innerhalb von 20 Minuten auf 60° C erhöht. Die Temperatur wird weitere 35 Minuten bei 60° C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25° C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20° C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102° C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20

Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

**1.** Reaktivfarbstoffe der Formel

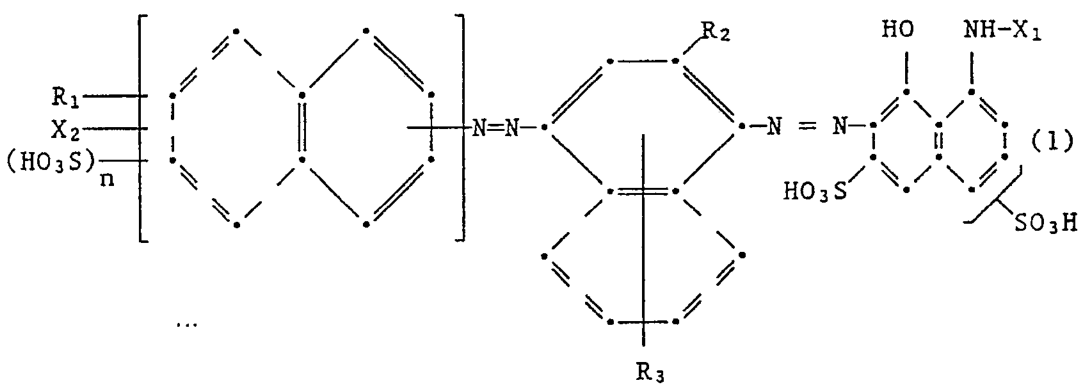

(1),

worin $R_1$ Wasserstoff, Halogen, $C_{1-4}$-Alkyl, $C_{1-4}$-Alkoxy, Nitro oder Carboxy; $R_2$ $C_{1-4}$-Alkyl oder $C_{1-4}$-Alkoxy; $R_3$ Wasserstoff, $C_{1-4}$-Alkyl, $C_{1-4}$-Alkoxy, Acetylamino, Sulfoacetylamino, Ureido oder Sulfo; n = 1 bis 3; $X_2$ Wasserstoff, Vinylsulfonyl, β-Chloräthylsulfonyl, β-Sulfatoäthylsulfonyl, β-Thiosulfatoäthylsulfonyl, β-Phosphatoäthylsulfonyl, β-Acetoxyäthylsulfonyl oder ein Rest der Formel

$ClCH_2CH_2SO_2CH_2CH_2CH_2CONH$-,
$ClCH_2CH_2SO_2CH_2CH_2NHCO$- oder
$HO_3SOCH_2CH_2SO_2CH_2CH_2NHCO$- ;

$X_1$ ein faserreaktiver Rest der Formel

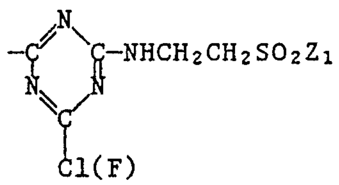

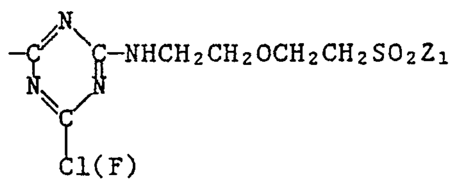

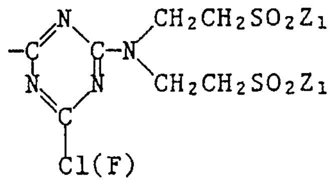

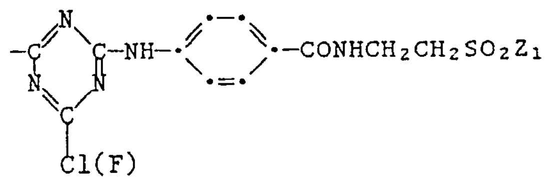

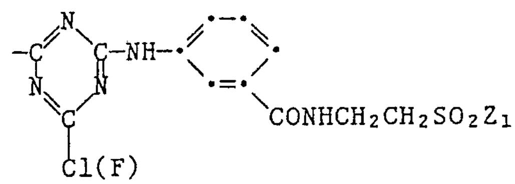

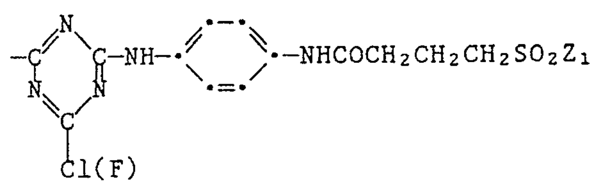

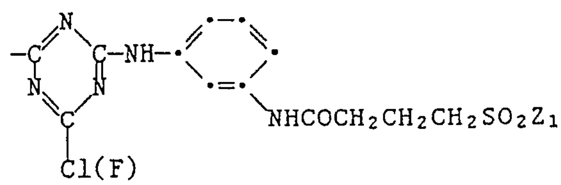

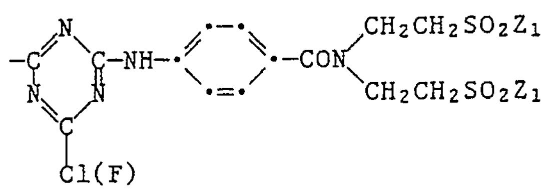

oder

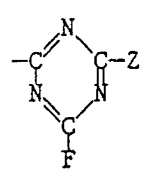

;

$Z_1$ Vinylsulfonyl, β-Chloräthylsulfonyl, β-Sulfatoäthylsulfonyl, β-Thiosulfatoäthylsulfonyl, β-Phosphatoäthylsulfonyl oder β-Acetoxyäthylsulfonyl; und Z den Rest von Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m-und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, Naphthylamin-(1), Naphthylamin-(2), Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Amino-toluol-4-sulfonsäure,2-Aminotoluol-5-sulfonsäure, p-Aminosalicylsäure, 1-Amino-4-carboxybenzol-3-sulfonsäure, 1-Amino-2-carboxybenzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5-7-, -3,6,8- und -4,6,8-trisulfonsäure, 2-Naphthylamin-1,3,7-, -1,5,7-, -3,5,7-, -3,6,7-, -3,6,8- und 4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxypropanol, γ-Aethoxypropanol, β-Aethoxy-β-äthoxyäthanol, Glycolsäure, Phenol, o-, m- und p-Chlorphenol, Methanthiol, Aethanthiol, Propanthiol, Isopropanthiol, n-Butanthiol, Thioglycolsäure, Thioharnstoff, Thiophenol, α-Thionaphthol oder β-Thionaphthol bedeuten.

2. Reaktivfarbstoffe gemäss Anspruch 1, der Formel

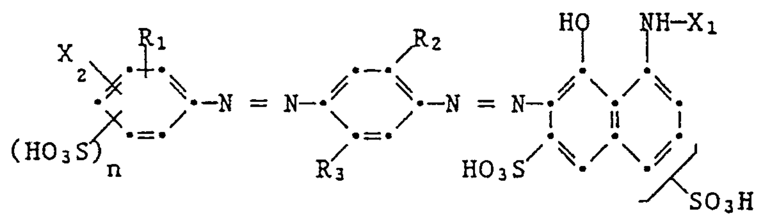

(2),

worin $R_1$ Wasserstoff, Chlor, Methyl, Aethyl, Methoxy, Aethoxy, Nitro oder Carboxy; $R_2$ Methyl, Aethyl, Methoxy oder Aethoxy; $R_3$ Wasserstoff, Methyl, Aethyl, Methoxy, Aethoxy, Acetylamino, Ureido oder Sulfo; und n = 1 oder 2 ist; und $X_1$ und $X_2$ die in Anspruch 1 angegebenen Bedeutungen haben.

3. Reaktivfarbstoffe gemäss Anspruch 1, der Formel

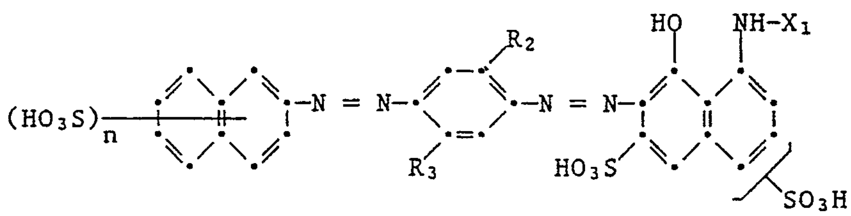

(3),

worin $R_2$ Methyl, Aethyl, Methoxy, oder Aethoxy; $R_3$ Wasserstoff, Methyl, Aethyl, Methoxy, Aethoxy, Acetylamino, Ureido oder Sulfo; und n = 1 bis 3 ist; und $X_1$ die in Anspruch 1 angegebenen Bedeutungen hat.

4. Reaktivfarbstoffe gemäss Anspruch 1, der Formel

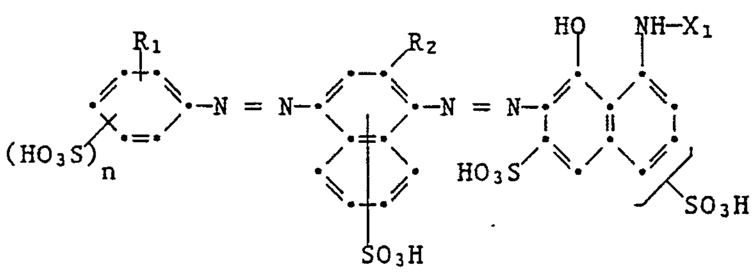

(4),

worin $R_1$ Wasserstoff, Chlor, Methyl, Aethyl, Methoxy, Aethoxy, Nitro oder Carboxy; $R_2$ Methyl, Aethyl, Methoxy oder Aethoxy; und n = 1 bis 2 ist; und $X_1$ die in Anspruch 1 angegebenen Bedeutungen hat.

**5.** Reaktivfarbstoffe gemäss Anspruch 2, der Formel

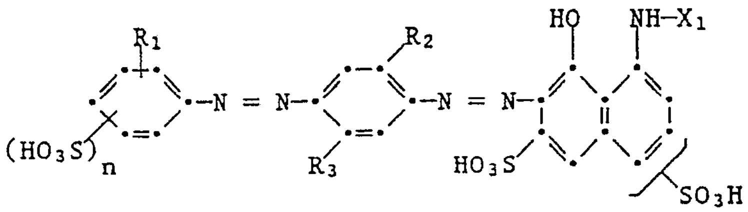

(5),

worin $R_1$, $R_2$, $R_3$ und n die in Anspruch 2 und $X_1$ die in Anspruch 1 angegebenen Bedeutungen haben.

**6.** Reaktivfarbstoffe gemäss Anspruch 2, der Formel

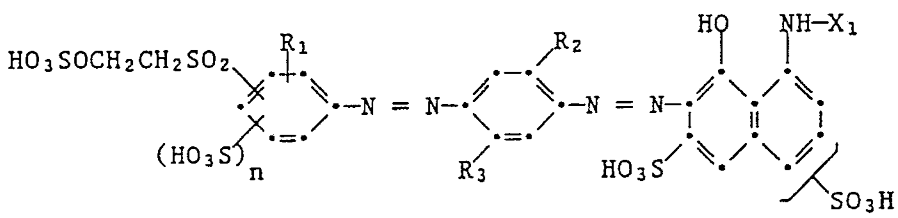

(6),

worin $R_1$, $R_2$, $R_3$ und n die in Anspruch 2 und $X_1$ die in Anspruch 1 angegebenen Bedeutungen haben.

**7.** Reaktivfarbstoffe gemäss einem der Ansprüche 1 bis 6, dadurch gekennzeichnet, dass $X_1$ ein Rest der Formel

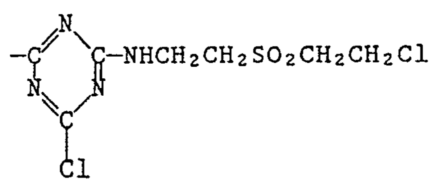

,

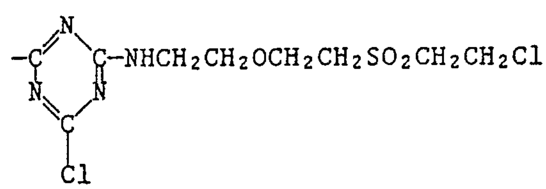

,

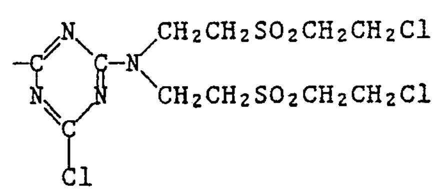

,

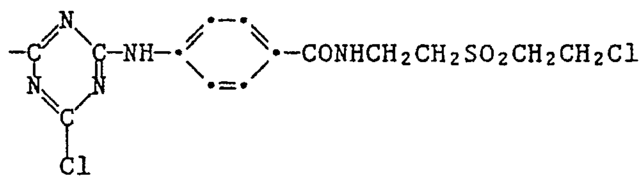

,

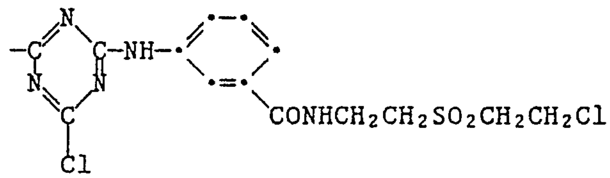

,

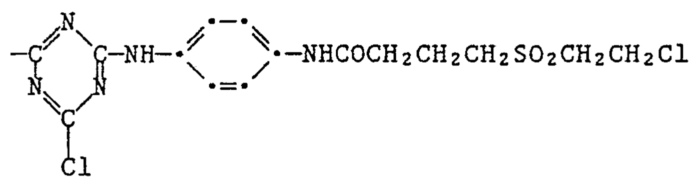

,

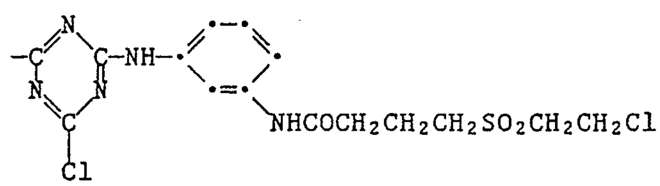

,

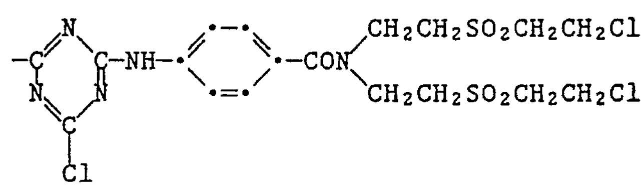

oder ein entsprechender Fluortriazinrest ist.

8. Reaktivfarbstoff gemäss Anspruch 1, dadurch gekennzeichnet, dass $X_1$ die in Anspruch 7 angegebenen Bedeutungen hat und $X_2$ Wasserstoff ist.

9. Reaktivfarbstoff gemäss Anspruch 8, der Formel

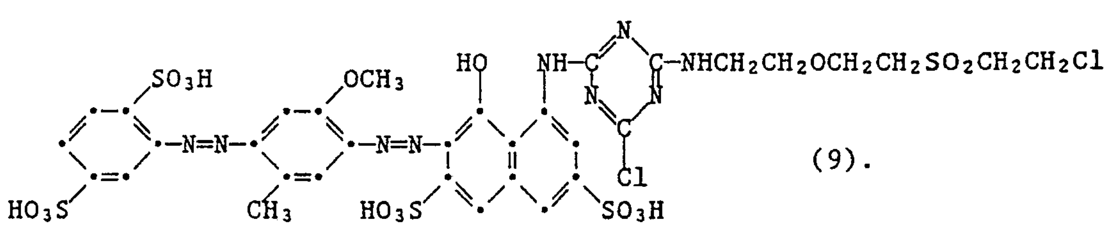

(9).

10. Reaktivfarbstoff gemäss Anspruch 8, der Formel

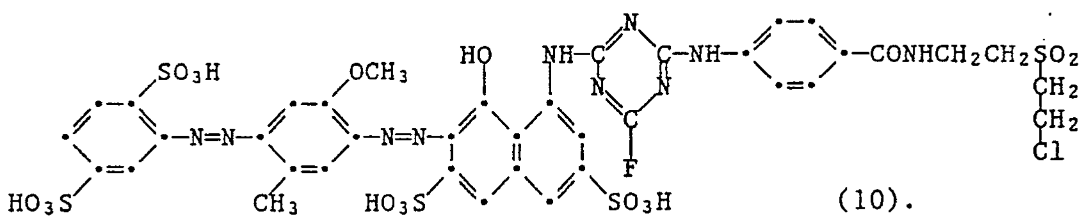

(10).

**11.** Reaktivfarbstoff gemäss Anspruch 1, der Formel

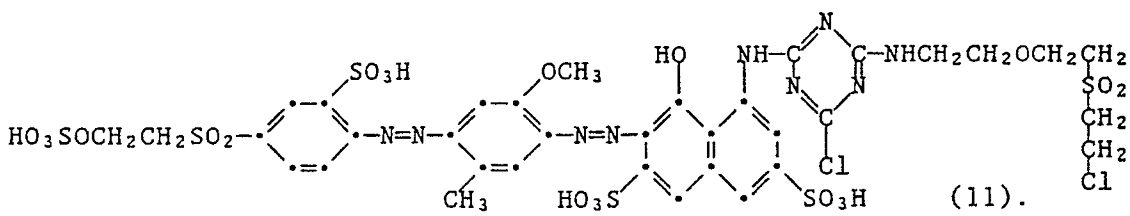

(11).

**12.** Reaktivfarbstoffe gemäss Anspruch 2, der Formel

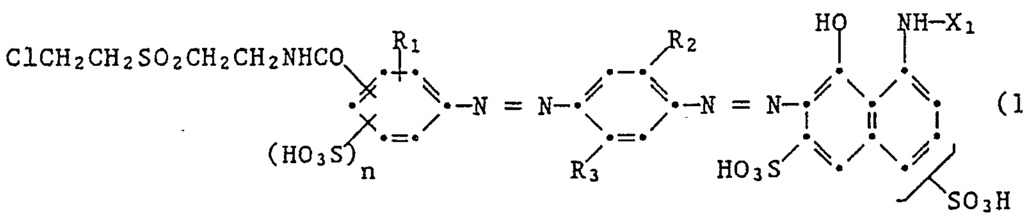

(14),

worin $R_1$, $R_2$, $R_3$ und n die in Anspruch 2 und $X_1$ die in Anspruch 1 angegebenen Bedeutungen haben.

**13.** Verfahren zur Herstellung von Verbindungen der Formel (1) gemäss Anspruch 1, dadurch gekennzeichnet, dass man eine Diazokomponente der Formel

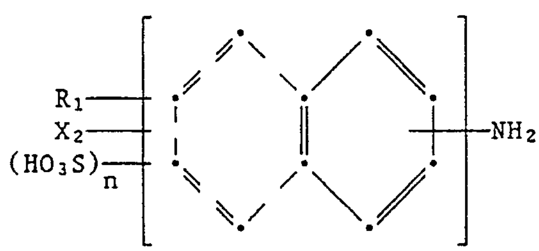

diazotiert und auf eine Mittelkomponente der Formel

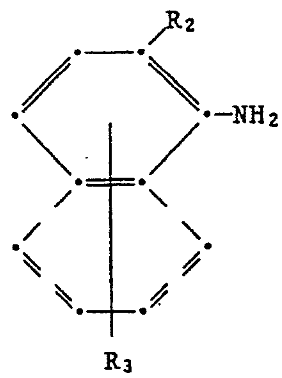

kuppelt, das erhaltene Monoazozwischenprodukt erneut diazotiert und auf H(K)-Säure kuppelt und die so erhaltene Disazoverbindung mit einer Verbindung der Formel

Hal-$X_1$

acyliert, worin $R_1$, $R_2$, $R_3$, $X_1$, $X_2$ und n jeweils die im Anspruch 1 angegebene Bedeutung haben und Hal für Fluor oder Chlor steht.

**14.** Verwendung der Reaktivfarbstoffe gemäss Anspruch 1, zum Färben oder Bedrucken von Textilfasern.

**15.** Verwendung gemäss Anspruch 14, zum Färben oder Bedrucken von Baumwolle.

## Claims

**1.** A reactive dye of the formula

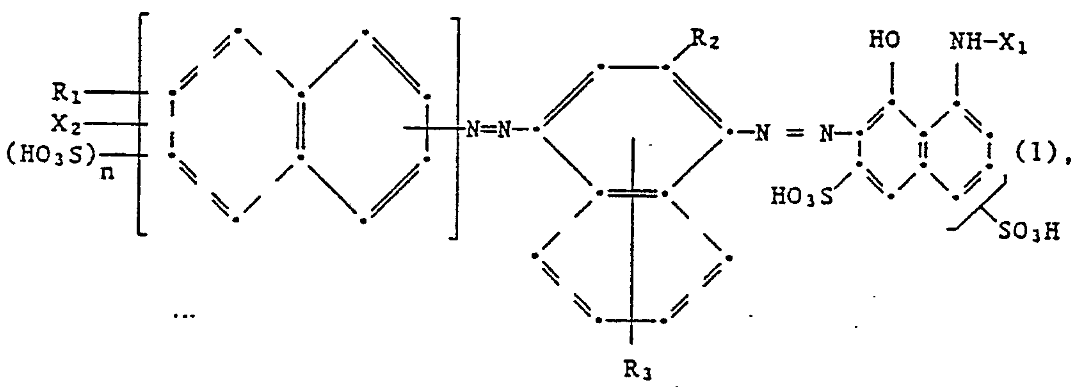

in which $R_1$ is hydrogen, halogen, $C_1$-$C_4$alkyl, $C_1$-$C_4$alkoxy, nitro or carboxyl; $R_2$ is $C_1$-$C_4$alkyl or $C_1$-$C_4$alkoxy; $R_3$ is hydrogen, $C_1$-$C_4$alkyl, $C_1$-$C_4$alkoxy, acetylamino, sulfoacetylamino, ureido or sulfo; n is 1 to 3; $X_2$ is hydrogen, vinylsulfonyl, $\beta$-chloroethylsulfonyl, $\beta$-sulfatoethylsulfonyl, $\beta$-thiosulfatoethylsulfonyl, $\beta$-phosphatoethylsulfonyl, $\beta$-acetoxyethylsulfonyl or a radical of the formula

$ClCH_2CH_2SO_2CH_2CH_2CH_2CONH$-,
$ClCH_2CH_2SO_2CH_2CH_2NHCO$- or
$HO_3SOCH_2CH_2SO_2CH_2CH_2NHCO$- ;

$X_1$ is a fibre-reactive radical of the formula

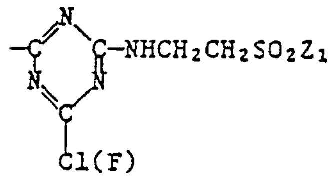

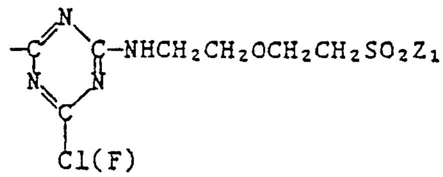

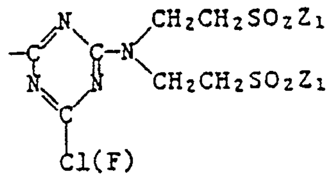

.

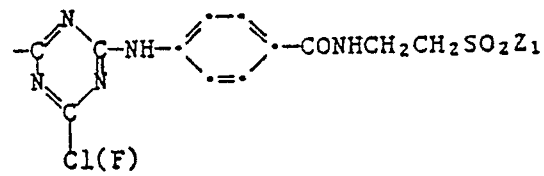

.

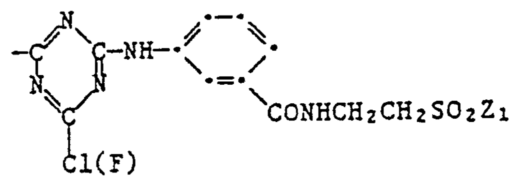

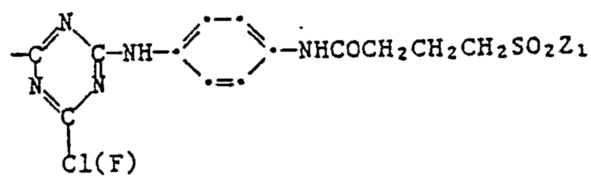

.

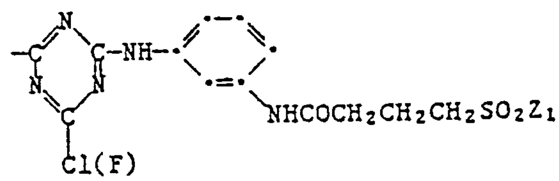

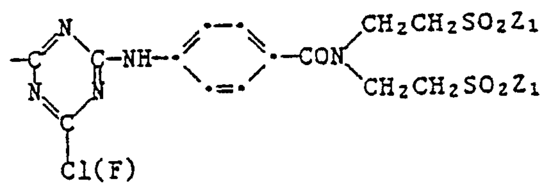

or

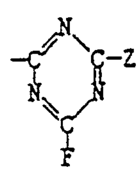

;

$Z_1$ is vinylsulfonyl, β-chloroethylsulfonyl, β-sulfatoethylsulfonyl, β-thiosulfatoethylsulfonyl, β-phosphatoethylsulfonyl or β-acetoxyethylsulfonyl; and Z is the radical of ammonia, methylamine, dimethylamine, ethylamine, diethylamine, propylamine, isopropylamine, butylamine, dibutylamine, isobutylamine, sec-butylamine, tert-butylamine, hexylamine, methoxyethylamine, ethoxyethylamine, methoxypropylamine, chloroethylamine, hydroxyethylamine, dihydroxyethylamine, hydroxypropylamine, aminoethanesulfonic acid, β-sulfatoethylamine, benzylamine, cyclohexylamine, aniline, o-, m- and p-toluidine, 2,3-, 2,4-, 2,5-, 2,6-, 3,4- and 3,5-dimethylaniline, o-, m- and p-chloroaniline, N-methylaniline, N-ethylaniline, 3- or 4-acetylaminoaniline, 2,5-dimethoxyaniline, o-, m- and p-anisidine, o-, m- and p-phenetidine, naphth-1-ylamine, naphth-2-ylamine, orthanilic acid, metanilic acid, sulfanilic acid, aniline-2,4-disulfonic acid, aniline-2,5-disulfonic acid, anthranilic acid, m- and p-aminobenzoic acid, 2-amino-toluene-4-sulfonic acid, 2-aminotoluene-5-sulfonic acid, p-aminosalicylic acid, 1-amino-4-carboxybenzene-3-sulfonic acid, 1-amino-2-carboxybenzene-5-sulfonic acid, 1-amino-5-carboxybenzene-2-sulfonic acid, 1-naphthylamine-2-, -3-, -4-, -5-, -6-, -7- and -8-sulfonic acid, 2-naphthylamine-1-, -3-, -4-, -5-, -6-, -7- and -8-sulfonic acid, 1-naphthylamine-2,4-, -2,5-, -2,7-, -2,8-, -3,5-, -3,6-, -3,7-, -3,8-, -4,6-, -4,7-, -4,8- and -5,8-disulfonic acid, 2-naphthylamine-1,5-, -1,6-, -1,7-, -3,6-, -3,7-, -4,7-, -4,8-, -5,7- and -6,8-disulfonic acid, 1-naphthylamine-2,4,6-, -2,4,7-, -2,5,7-, -3,5,7-, -3,6,8- and -4,6,8-trisulfonic acid, 2-naphthylamine-1,3,7-, -1,5,7-, -3,5,7-, -3,6,7-, -3,6,8- and -4,6,8-trisulfonic acid, 2-, 3- and 4-aminopyridine, 2-aminobenzothiazole, 5-, 6- and 8-aminoquinoline, 2-aminopyrimidine, morpholine, piperidine, piperazine, water, methanol, ethanol, propanol, isopropanol, n-butanol, isobutanol, sec-butanol, tert-butanol, hexanol, cyclohexanol, $\beta$-methoxyethanol, $\beta$-ethoxyethanol, $\gamma$-methoxypropanol, $\gamma$-ethoxypropanol, $\beta$-ethoxy-$\beta$-ethoxyethanol, glycolic acid, phenol, o-, m- and p-chlorophenol, methanethiol, ethanethiol, propanethiol, isopropanethiol, n-butanethiol, thioglycolic acid, thiourea, thiophenol, $\alpha$-thionaphthol or $\beta$-thionaphthol.

**2.** A reactive dye according to claim 1 of the formula

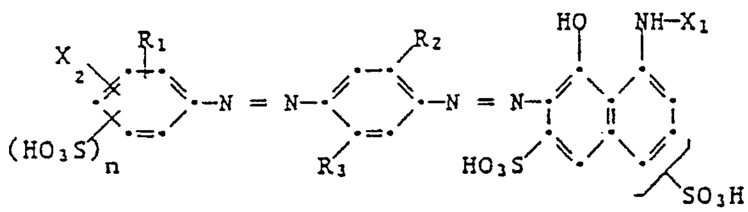

(2),

in which $R_1$ is hydrogen, chlorine, methyl, ethyl, methoxy, ethoxy, nitro or carboxyl; $R_2$ is methyl, ethyl, methoxy or ethoxy; $R_3$ is hydrogen, methyl, ethyl, methoxy, ethoxy, acetylamino, ureido or sulfo; n is 1 or 2; and $X_1$ and $X_2$ are as defined in claim 1.

**3.** A reactive dye according to claim 1, of the formula

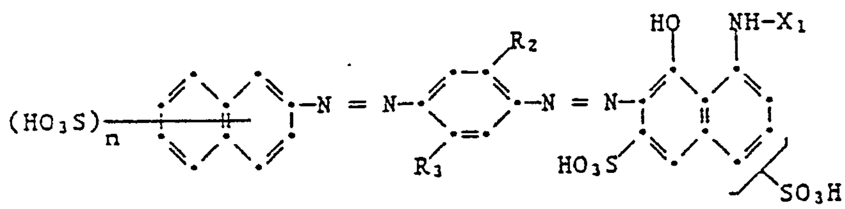

(3),

in which $R_2$ is methyl, ethyl, methoxy or ethoxy; $R_3$ is hydrogen, methyl, ethyl, methoxy, ethoxy, acetylamino, ureido or sulfo; n is 1 to 3; and $X_1$ is as defined in claim 1.

**4.** A reactive dye according to claim 1, of the formula

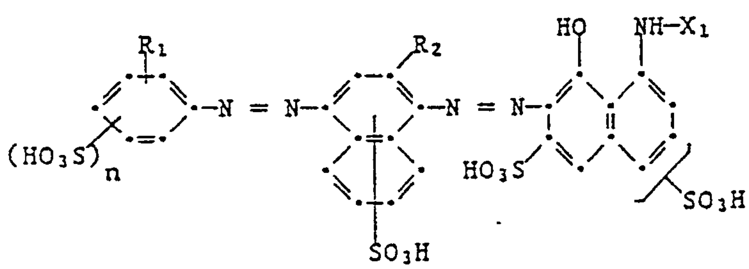

(4),

in which $R_1$ is hydrogen, chlorine, methyl, ethyl, methoxy, ethoxy, nitro or carboxyl; $R_2$ is methyl, ethyl, methoxy or ethoxy; n is 1 to 2; and $X_1$ is as defined in claim 1.

5. A reactive dye according to claim 2, of the formula

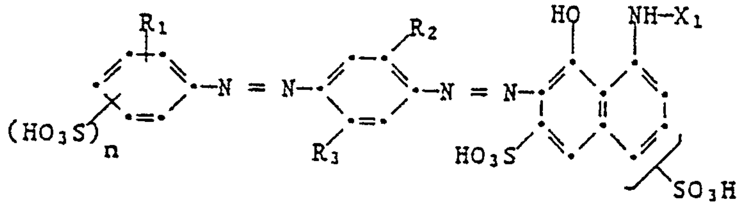

(5),

in which $R_1$, $R_2$, $R_3$ and n are as defined in claim 2 and $X_1$ is as defined in claim 1.

6. A reactive dye according to claim 2, of the formula

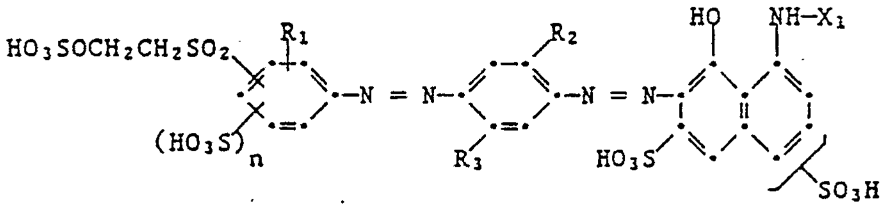

(6),

in which $R_1$, $R_2$, $R_3$ and n are as defined in claim 2 and $X_1$ is as defined in claim 1.

7. A reactive dye according to any one of claims 1 to 6, wherein $X_1$ is a radical of the formula

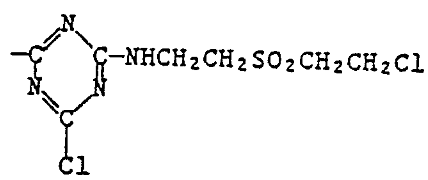

,

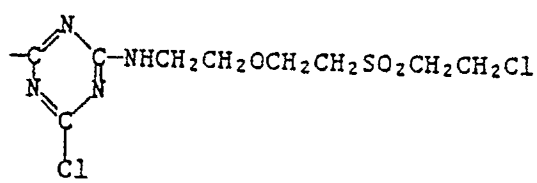

,

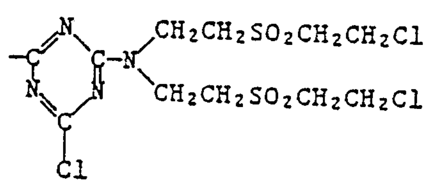

,

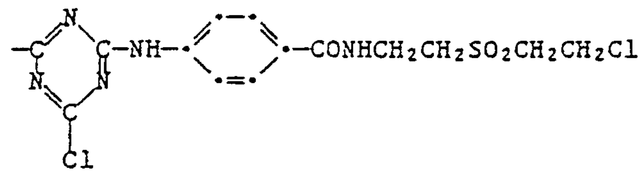

,

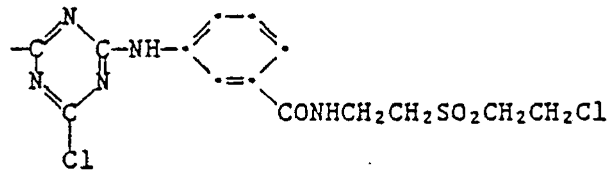

,

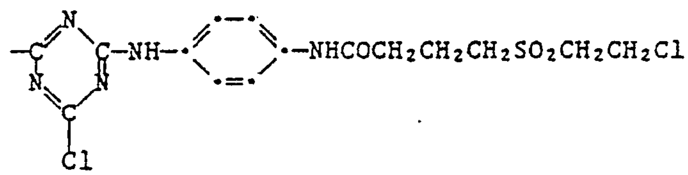

,

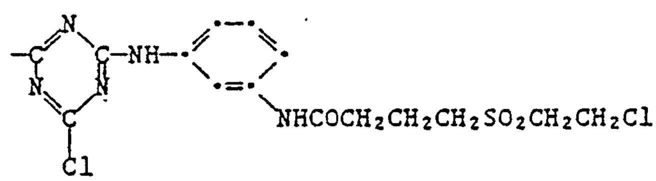

,

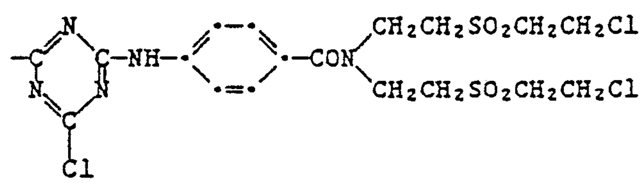

or a corresponding fluorotriazine radical.

8. A reactive dye according to claim 1, wherein $X_1$ is as defined in claim 7 and $X_2$ is hydrogen.

9. A reactive dye according to claim 8, of the formula

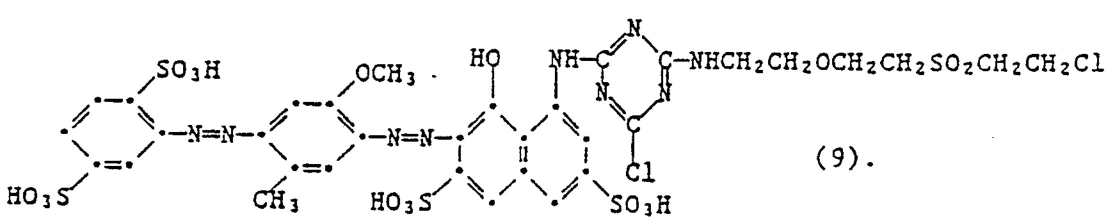

(9).

10. A reactive dye according to claim 8, of the formula

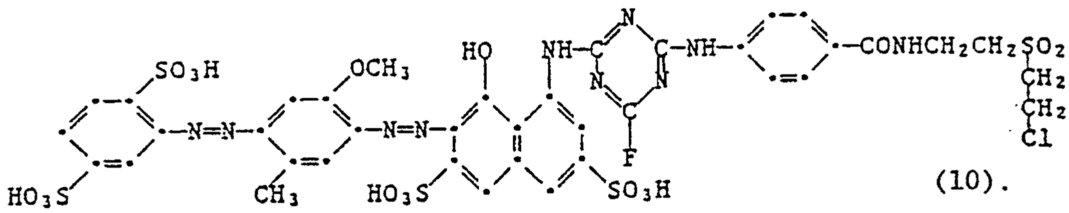

(10).

**11.** A reactive dye according to claim 1, of the formula

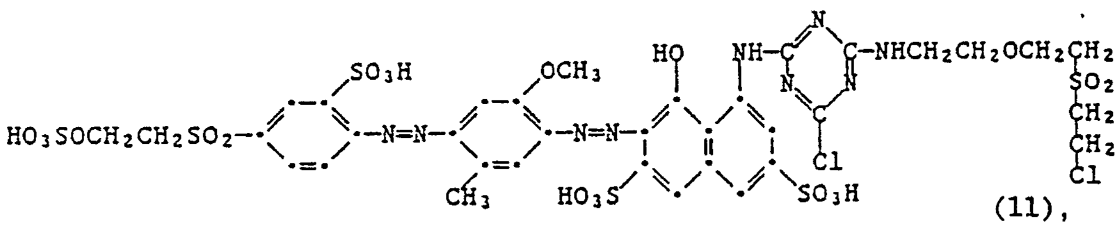

(11),

**12.** A reactive dye according to claim 2, of the formula

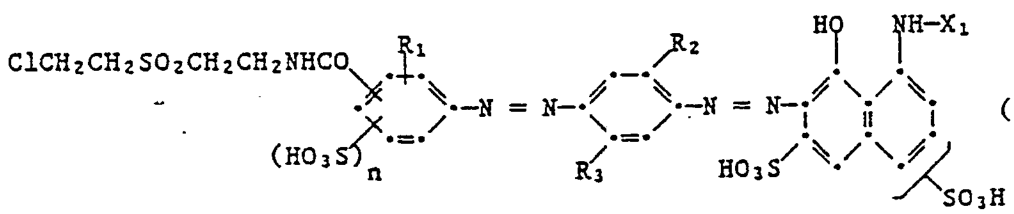

(14),

in which $R_1$, $R_2$, $R_3$ and n are as defined in claim 2 and $X_1$ is as defined in claim 1.

**13.** A process for preparing a compound of the formula (1) according to claim 1, which comprises diazotising a diazo component of the formula

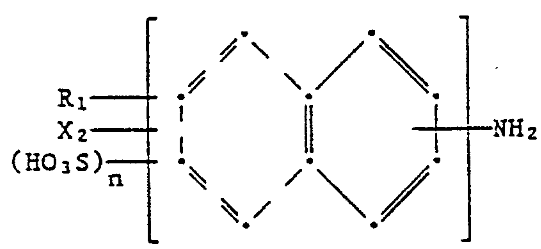

and coupling the product onto a central component of the formula

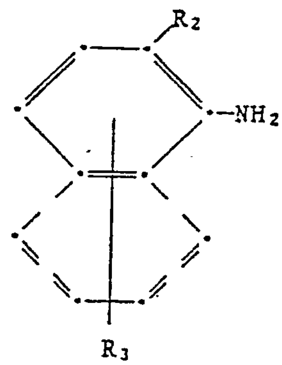

again diazotising the resulting monoazo intermediate and coupling the product onto H(K) acid and acylating the disazo compound thus obtained with a compound of the formula

Hal-$X_1$

in which $R_1$, $R_2$, $R_3$, $X_1$, $X_2$ and n are each as defined in claim 1 and Hal is fluorine or chlorine.

**14.** Use of a reactive dye according to claim 1, for dyeing or printing textile fibres.

**15.** Use according to claim 14, for dyeing or printing cotton.

## Revendications

**1.** Colorants réactifs de formule

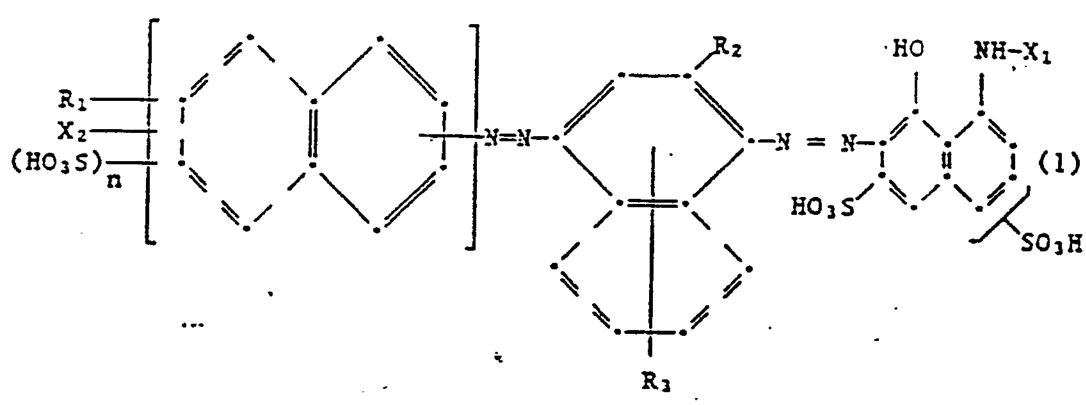

où $R_1$ représente un atome d'hydrogène, un atome d'halogène, un groupe alkyle en $C_{1-4}$, alcoxy en $C_{1-4}$, nitro ou carboxy, $R_2$ représente un groupe alkyle en $c_{1-4}$ ou alcoxy en $C_{1-4}$, $R_3$ représente un atome d'hydrogène, un groupe alkyle en $C_{1-4}$, alcoxy en $C_{1-4}$, acétylamino, sulfoacétylamino, uréido ou sulfo, n = 1 à 3, $X_2$ représente un atome d'hydrogène, un groupe vinylsulfonyle, $\beta$-chloroéthylsulfonyle, $\beta$-sulfatoéthylsulfonyle, $\beta$-thiosulfatoéthylsulfonyle, $\beta$-phosphatoéthylsulfonyle, $\beta$-acétoxyéthylsulfonyle ou un fragment de formule

$ClCH_2CH_2SO_2CH_2CH_2CH_2CONH$-,
$ClCH_2CH_2SO_2CH_2CH_2NHCO$- ou
$HO_3SOCH_2CH_2SO_2CH_2CH_2NHCO$-,

$X_1$ représente un fragment réagissant avec les fibres, de formule

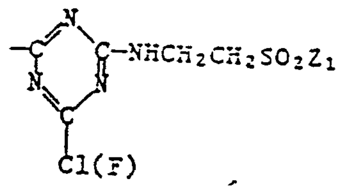

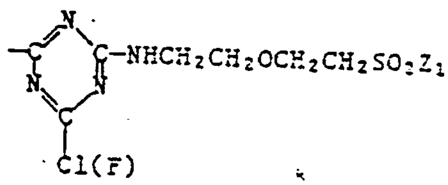

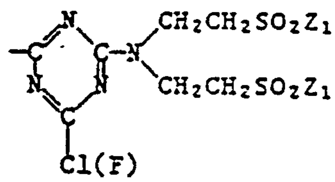

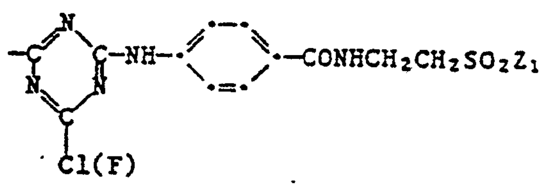

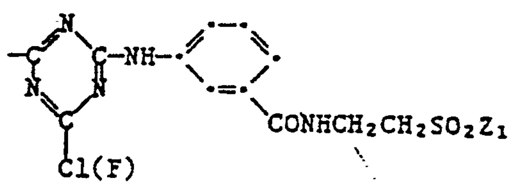

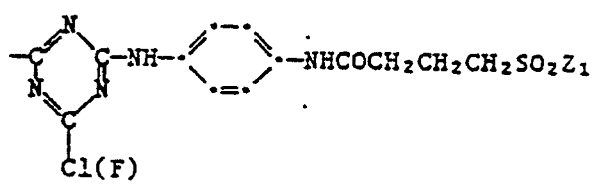

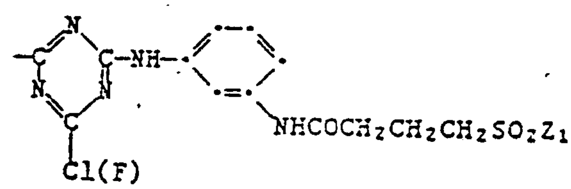

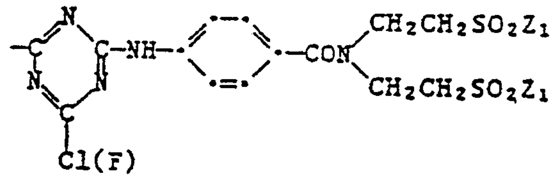

ou

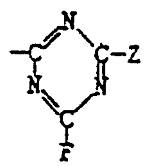

;

$Z_1$ représente un groupe vinyle, β-chloroéthyle, β-sulfatoéthyle, β-thiosulfatoéthyle, β-phosphatoéthyle ou β-acétoxyéthyle et Z représente un fragment d'ammoniac, de méthylamine, de diméthylamine, d'éthylamine, de diéthylamine, de propylamine, d'isopropylamine, de butylamine, de dibutylamine. d'isobutylamine, de sec.-butylamine, de tert.-butylamine, d'hexylamine, de méthoxyéthylamine, d'éthoxyéthylamine, de méthoxypropylamine, de chloroéthylamine, d'hydroxyéthylamine, de dihydroxyéthylamine, d'hydroxypropylamine, d'acide aminoéthanesulfonique, de β-sulfatoéthylamine, de benzylamine, de cyclohexylamine, d'aniline, de o-, m- et p-toluidine, de 2,3- 2,4-, 2,5-, 2,6-, 3,4- et 3,5-diméthylaniline, de o-, m- et p-chloraniline, de N-méthylaniline, de N-éthylaniline, de 3- ou 4-acétylaminoaniline, de 2,5-diméthoxyaniline, de o-, m- et p-anisidine, de o-, m- et p-phénétidine, de naphtylamine-(1), de naphtylamine-(2), d'acide orthanilique, d'acide métanilique, d'acide sulfanilique, d'acide aniline-2,4-disulfonique, d'acide aniline-2,5-disulfonique, d'acide anthranilique, d'acide m- et p-aminobenzoïque, d'acide 2-aminotoluène-4-sulfonique, d'acide 2-aminotoluène-5-sulfonique, d'acide p-aminosalicylique, d'acide 1-amino-4-carboxybenzène-3-sulfonique, d'acide 1-amino-2-carboxybenzène-5-sulfonique, d'acide 1-amino-5-carboxybenzène-2-sulfonique, d'acide 1-naphtylamine-2-, -3-, -4-, -5-, -6-, -7- et -8-sulfonique, d'acide 2-naphtylamine-1-, -3-, -4-, -5-, -6-, -7- et -8-sulfonique, d'acide 1-naphtylamine-2,4-, -2,5-, -2,7-, -2,8-, -3,5-, -3,6-, -3,7-, -3,8-, -4,6-, -,4,7-, -4,8- et -5,8-disulfonique, d'acide 2-naphtylamine-1,5-, -1,6-, -1,7-, -3,6-, -3,7-, -4,7-, -4,8-, -5,7- et -6,8-disulfonique, d'acide 1-naphtylamine-2,4,6-, -2,4,7-, -2,5,7-, -3,5,7-, -3,6,8-et -4,6,8-trisulfonique, d'acide 2-naphtylamine-1,3,7-, -1,5,7-, -3,5,7-, -3,6,7-, -3,6,8- et -4,6,8-trisulfonique, de 2-, 3- et 4-aminopyridine, de 2-aminobenzothiazole, de 5-, 6- et 8-aminoquinoline, de 2-aminopyrimidine, de morpholine, de pipéridine, de pipérazine, d'eau, de méthanol, d'éthanol, de propanol, d'isopropanol, de n-butanol, d'isobutanol, de sec.-butanol, de tert.-butanol, d'hexanol, de cyolohexanol, de β-méthoxyéthanol, de β-éthoxyéthanol, de γ-méthoxypropanol, de γ-éthoxypropanol, de β-éthoxy-β-éthoxyéthnol, d'acide glycolique, de phénol, de o-, m- et p-chlorophénol, de méthylmercaptan, d'éthylmercaptan, de propylmercaptan, d'isopropylmercaptan, de n-butylmercaptan, d'acide thioglycolique, de thiourée, de thiophénol, d'α-thionaphtol ou de β-thionaphtol.

**2.** Colorants réactifs selon la revendication 1, de formule

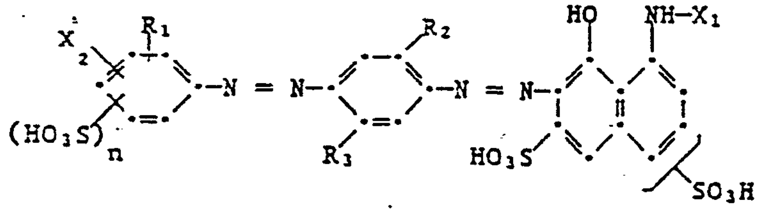

(2),

où $R_1$ représente un atome d'hydrogène, un atome de chlore, un groupe méthyle, éthyle, méthoxy, éthoxy, nitro ou carboxy, $R_2$ représente un groupe méthyle, éthyle, méthoxy ou éthoxy, $R_3$ représente un atome d'hydrogène, un groupe méthyle, éthyle, méthoxy, éthoxy, acétylamino, uréido ou sulfo et n = 1 ou 2, et $X_1$ et $X_2$ ont les mêmes significations que dans la revendication 1.

**3.** Colorants réactifs selon la revendication 1, de formule

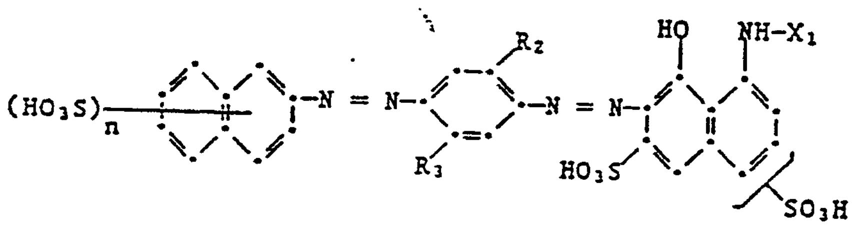

(3),

où $R_2$ représente un groupe méthyle, éthyle, méthoxy ou éthoxy, $R_3$ représente un atome d'hydrogène, un groupe méthyle, éthyle, méthoxy, éthoxy, acétylamino, uréido ou sulfo et n = 1 à 3, et $X_1$ a la même signification que dans la revendication 1.

**4.** Colorants réactifs selon la revendication 1, de formule

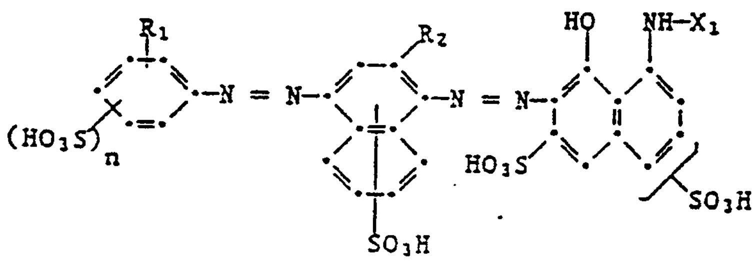

(4),

où $R_1$ représente un atome d'hydrogène, un atome de chlore, un groupe méthyle, éthyle, méthoxy, éthoxy, nitro ou carboxy, $R_2$ représente un groupe méthyle, éthyle, méthoxy ou éthoxy, et n = 1 à 2 et $X_1$ a la même signification que dans la revendication 1.

**5.** Colorants réactifs selon la revendication 2, de formule

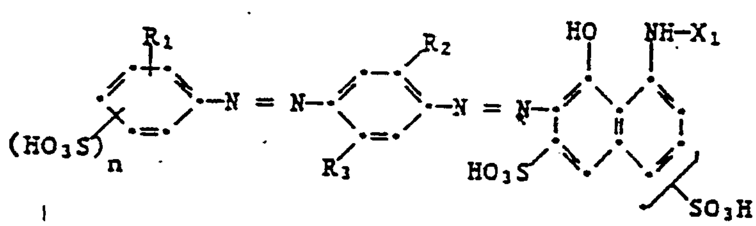

(5),

où $R_1$, $R_2$, $R_3$ et n ont les mêmes significations que dans la revendication 2 et $X_1$ a la même signification que dans la revendication 1.

6. Colorants réactifs selon la revendication 2, de formule

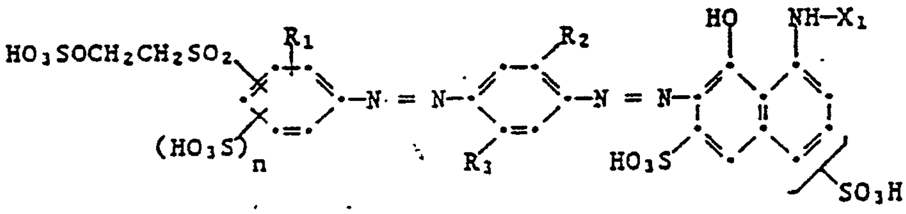

(6),

où $R_1$, $R_2$, $R_3$ et n ont les mêmes significations que dans la revendication 2 et $X_1$ a la même signification que dans la revendication 1.

7. Colorants réactifs selon l'une quelconque des revendications 1 à 6, caractérisés en ce que $X_1$ est un fragment de formule

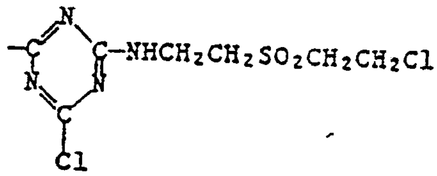

,

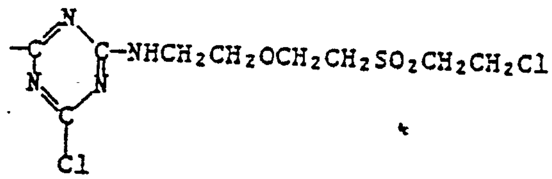

,

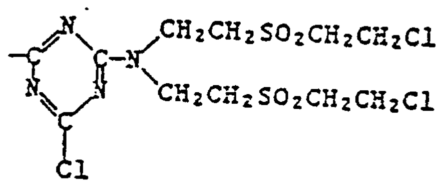

,

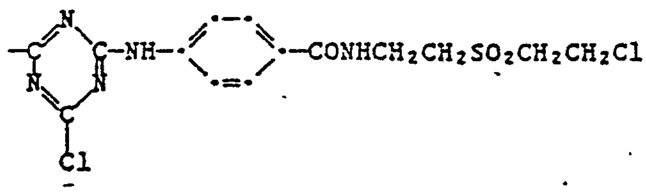

,

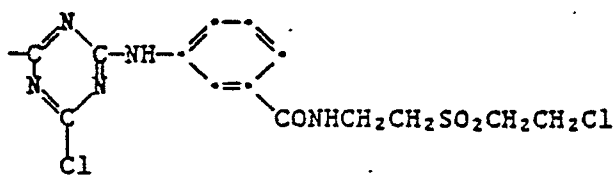

,

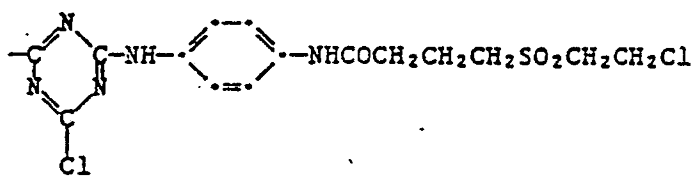

,

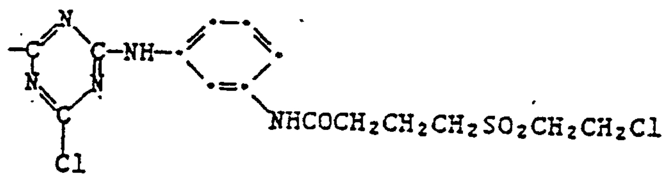

,

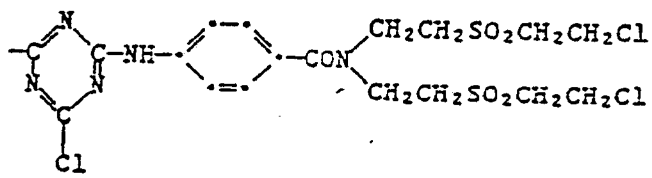

ou un fragment fluorotriazine correspondant.

**8.** Colorant réactif selon la revendication 1, caractérisé en ce que $X_1$ a la même signification que dans la revendication 7 et $X_2$ est un atome d'hydrogène.

**9.** Colorant réactif selon la revendication 8, de formule

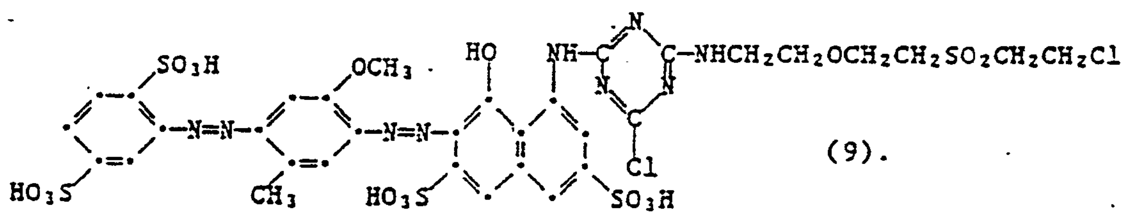

(9).

**10.** Colorant réactif selon la revendication 8, de formule

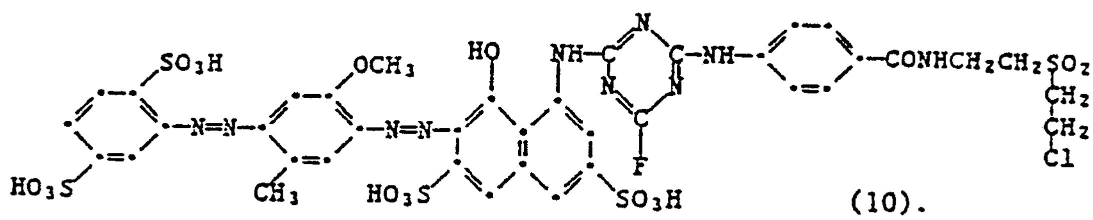

(10).

**11.** Colorant réactif selon la revendication 1, de formule

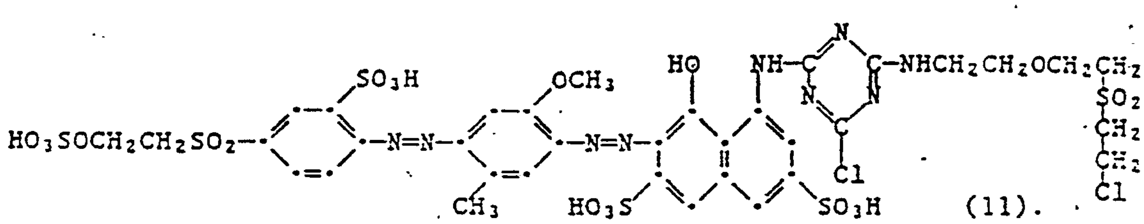

(11).

**12.** Colorant réactif selon la revendication 2, de formule

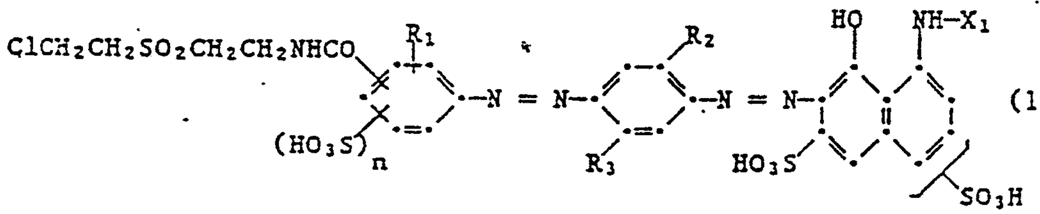

(14),

où $R_1$, $R_2$, $R_3$ et n ont les mêmes significations que dans la revendication 2 et $X_1$ a la même signification que dans la revendication 1.

**13.** Procédé pour préparer des composés de formule (1) selon la revendication 1, caractérisé en ce que l'on diazote un composant diazotable de formule

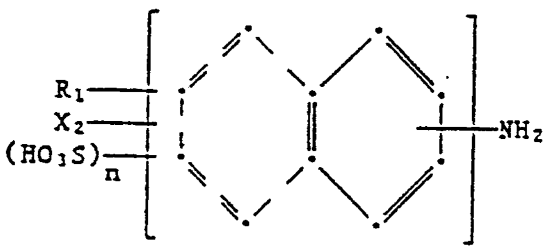

et on le fait copuler sur un composant médian de formule

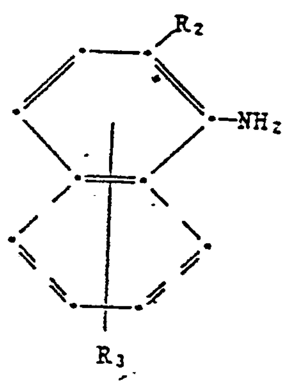

on procède à une nouvelle diazotation du produit monoazoïque intermédiaire et on fait copuler ce dernier sur l'acide H(K) et on acyle le composé disazoïque ainsi obtenu avec un composé de formule

Hal-$X_1$

$R_1$, $R_2$, $R_3$, $X_1$, $X_2$ et n chacun la
même signification que dans la revendication 1 et Hal représentant un atome de fluor ou de chlore.

**14.** Utilisation des colorants réactifs selon la revendication 1 pour la teinture ou l'impression de fibres textiles.

**15.** Utilisation selon la revendication 14, pour la teinture ou l'impression du coton.